# EUROPEAN PATENT APPLICATION

(11) **EP 4 693 958 A1**
(43) Date of publication of application: **11.02.2026**
(21) Application number: 24796278.0
(22) Date of filing: 26.04.2024
(51) Int. Cl.: H04B 14/04

(54) **COMMUNICATION METHOD FOR UWB AND RELATED PRODUCT**

(30) Priority: 28.04.2023 CN 202310493176
(71) Applicant: Huawei Technologies Co., Ltd., Shenzhen, Guangdong 518129 (CN)
(72) Inventor: WU, Kuan, Shenzhen, Guangdong 518129 (CN); CHITRAKAR, Rojan, Shenzhen, Guangdong 518129 (CN); HUANG, Lei, Shenzhen, Guangdong 518129 (CN); YANG, Xun, Shenzhen, Guangdong 518129 (CN)
(74) Representative: MERH-IP Matias Erny Reichl Hoffmann Patentanwälte PartG mbB
(86) International application number: PCT/CN2024/090177
(87) International publication number: WO 2024/222908

(57) **Abstract**

This application discloses a communication method for a UWB and a related product. This application may be applied to a UWB-based wireless personal area network system, a sensing system, a positioning system, a ranging system, or a communication system, and may be further applied to a wireless local area network system that supports 802.11 series protocols such as a next-generation Wi-Fi protocol of IEEE 802.11ax, for example, 802.11be or Wi-Fi 7, and a next-generation protocol of 802.11be, for example, Wi-Fi 8. The method includes: generating indication information, where the indication information indicates to construct a frame count (frame counter, FC) based on a first field in a first message, and the first field indicates a type of the first message; and sending the indication information. The method in embodiments of this application can reduce signaling overheads.

## Description

This application claims priority to Chinese Patent Application No. 202310493176.4, filed with the China National Intellectual Property Administration on April 28, 2023, and entitled "COMMUNICATION METHOD FOR UWB AND RELATED PRODUCT", which is incorporated herein by reference in its entirety.

### TECHNICAL FIELD

This application relates to the communication field, and in particular, to a communication method for a UWB and a related product.

### BACKGROUND

An ultra-wideband (ultra wideband, UWB) technology is a wireless communication and sensing/ranging technology in which a nanosecond-level non-sine narrow impulse is used for signal transmission. Therefore, the ultra-wideband occupies a wide spectral range. Due to a narrow impulse and extremely low radiation spectral density of the ultra-wideband, a UWB system has advantages of a strong multipath resolution capability, low power consumption, high confidentiality, and the like, and has attracted wide attention in the industry. The Institute of Electrical and Electronics Engineers (institute of electrical and electronics engineers, IEEE) has incorporated the UWB technology into IEEE 802 series wireless standards, and has released the UWB technology-based wireless personal area network (wireless personal area networks, WPAN) standard IEEE 802.15.4a and its evolved version IEEE 802.15.4z. Currently, formulation of a next-generation UWB WPAN standard IEEE 802.15.4ab has been put on the agenda. A UWB is planned to be comprehensively upgraded in the IEEE 802.15.4ab standard.

Because of a large bandwidth of the ultra-wideband system, an ultra-high-speed data receiving and sending capability is required for a UWB device, while a spectral efficiency of an impulse radio ultra-wideband (impulse radio ultra-wideband, IR-UWB) system based on impulse transmission is low. When transmitting same information, the IR-UWB system requires much higher power consumption overheads than another narrowband short range protocol (like a Bluetooth protocol and a Zigbee protocol). In a ranging or sensing scenario, measurement or sensing precision is closely related to a signal bandwidth. A larger signal bandwidth indicates higher sensing or ranging precision. Therefore, people consider receiving and sending a ranging or sensing reference signal through the UWB system, and transmitting all other data by using a narrowband (narrowband, NB) protocol, so that ranging and sensing precision can be ensured and power consumption can be reduced. A UWB technical solution combining a narrowband assisted UWB and multi-millisecond transmission is also referred to as a narrowband assisted multi-millisecond ultra-wideband (narrow-band assisted multi millisecond ultra-wideband, NBA-MMS UWB).

In an NBA-MMS UWB measurement scenario, to reduce a duty cycle of an NB signal, a message transmitted by using an NB protocol, for example, a start-of-ranging (start-of-ranging, SOR) message, may be a message in a compressed physical layer service data unit (PHY service data unit, PSDU) format. However, signaling overheads of the message in the compressed PSDU format are high.

### SUMMARY

Embodiments of this application disclose a communication method for a UWB and a related product, to resolve a problem of FC construction of a message in a compressed PSDU format, and reduce signaling overheads.

According to a first aspect, an embodiment of this application provides a communication method for an ultra-wideband UWB, where the method includes: generating indication information, where the indication information indicates to construct a frame count (frame counter, FC) based on a first field in a first message, and the first field indicates a type of the first message; and sending the indication information.

In this embodiment of this application, the indication information that indicates to construct the FC based on the first field in the first message is sent, so that the first message can be prevented from carrying a packet number (packet number, PN) field, thereby reducing signaling overheads.

In a possible implementation of the first aspect, the method further includes: sending a second message, where the second message includes a second field that indicates a timeout for receiving a start-of-ranging (start-of-ranging, SOR) message.

In this implementation, the second field indicates the timeout for receiving the SOR message, so that duration of waiting for the SOR message can be reduced, thereby reducing power consumption.

In a possible implementation of the first aspect, the second message further includes a field that indicates whether the second field exists.

In this implementation, the second message further includes the field that indicates whether the second field exists, so that a receive end learns whether the second field exists.

In a possible implementation of the first aspect, the second message is an advertising confirmation (advertising confirmation, ADV-CONF) message.

In this implementation, the second message is an ADV-CONF message, and an existing ADV-CONF message may be reused, so that impact on an existing protocol is small.

In a possible implementation of the first aspect, the sending the indication information includes: sending the first message, where the first message includes the indication information.

In this implementation, the first message includes the indication information, and no additional message is required to carry the indication information. Therefore, signaling overheads are low.

According to a second aspect, an embodiment of this application provides another communication method for an ultra-wideband UWB, where the method includes: receiving indication information, where the indication information indicates to construct an FC based on a first field in a first message, and the first field indicates a type of the first message; and constructing the FC based on the indication information.

In this embodiment of this application, the FC is constructed based on the indication information, and the first message does not need to carry a PN field, so that signaling overheads can be reduced.

In a possible implementation of the second aspect, the constructing the FC based on the indication information includes: constructing the FC according to the indication information and based on the first field, a measurement round identifier corresponding to the first message, and a measurement block identifier corresponding to the first message.

In this implementation, the FC is constructed based on the first field, the measurement round identifier corresponding to the first message, and the measurement block identifier corresponding to the first message. The first message does not need to carry a PN field, so that signaling overheads can be reduced.

In a possible implementation of the second aspect, the receiving the indication information includes: receiving the first message, where the first message includes the indication information.

In this implementation, the first message includes the indication information, and no additional message is required to carry the indication information. Therefore, signaling overheads are low.

In a possible implementation of the first aspect or the second aspect, that the indication information indicates to construct the FC based on the first field in the first message includes: The indication information indicates to construct the FC based on the first field and order information, in a message list, of a list element corresponding to the first message in the message list.

In this implementation, the indication information indicates to construct the FC based on the first field and the order information, in the message list, of the list element corresponding to the first message in the message list. The first message does not need to carry a PN field and a measurement round index, so that signaling overheads can be reduced.

In a possible implementation of the first aspect or the second aspect, different list elements in the message list correspond to different devices.

In a possible implementation of the first aspect or the second aspect, each list element in the message list includes a device identifier.

In a possible implementation of the first aspect or the second aspect, the message list is included in a third message sent before the first message is sent.

In a possible implementation of the first aspect or the second aspect, the third message is an ADV-CONF message in an NBA-MMS UWB measurement process.

In a possible implementation of the first aspect or the second aspect, the indication information further indicates whether the first message includes the measurement round identifier.

In this implementation, the indication information further indicates whether the first message includes the measurement round identifier, so that a receive end learns, based on the indication information, whether the first message includes the measurement round identifier.

In a possible implementation of the first aspect or the second aspect, the indication information further indicates whether the first message includes the measurement block identifier.

In this implementation, the indication information further indicates whether the first message includes the measurement block identifier, so that the receive end learns, based on the indication information, whether the first message includes the measurement block identifier.

According to a third aspect, an embodiment of this application provides another communication method for an ultra-wideband UWB, where the method includes: receiving a first message; and constructing an FC based on a first field in the first message, where the first field indicates a type of the first message.

In this embodiment of this application, the FC is constructed based on the first field in the first message, and the first message does not need to carry a PN field, so that signaling overheads can be reduced.

In a possible implementation of the third aspect, the constructing the frame count FC based on the first field in the first message includes: constructing the FC based on the first field, a measurement round identifier corresponding to the first message, and a measurement block identifier corresponding to the first message.

In a possible implementation of the third aspect, the constructing the frame count FC based on the first field in the first message includes: constructing the FC based on the first field and order information, in a message list, of a list element corresponding to the first message in the message list.

In a possible implementation of the first aspect, the second aspect, or the third aspect, the first message is a message in a compressed PSDU format.

In a possible implementation of the first aspect, the second aspect, or the third aspect, the first message is a control message in the NBA-MMS UWB measurement process.

In a possible implementation of the first aspect, the second aspect, or the third aspect, the first message is any one of a start-of-ranging SOR message, a polling/initiating POLL message, a report message, or a response message.

According to a fourth aspect, an embodiment of this application provides another communication method for an ultra-wideband UWB, where the method includes: generating indication information, where the indication information indicates to construct an FC based on order information, in a message list, of a list element corresponding to a first message in the message list; and sending the indication information.

In this embodiment of this application, the indication information indicates to construct the FC based on the order information, in the message list, of the list element corresponding to the first message in the message list, so that explicit carrying of a Round Index can be avoided, and signaling overheads can be reduced.

According to a fifth aspect, an embodiment of this application provides another communication method for an ultra-wideband UWB, where the method includes: receiving indication information, where the indication information indicates to construct an FC based on order information, in a message list, of a list element corresponding to a first message in the message list; and constructing the FC based on the indication information.

In this embodiment of this application, the FC is constructed based on the indication information, so that explicit carrying of a measurement round index (Round Index) can be avoided, and signaling overheads can be reduced.

In a possible implementation of the fifth aspect, the constructing the FC based on the indication information includes: constructing the FC based on the indication information, a measurement slot identifier corresponding to the first message, the order information, and a measurement block identifier corresponding to the first message.

In this implementation, the FC is constructed based on the measurement slot identifier corresponding to the first message, the order information, and the measurement block identifier corresponding to the first message, so that explicit carrying of a measurement round index (Round Index) can be avoided, and signaling overheads can be reduced.

According to a sixth aspect, an embodiment of this application provides another communication method for an ultra-wideband UWB, where the method includes: receiving a first message; and constructing an FC based on order information, in a message list, of a list element corresponding to the first message in the message list.

In this embodiment of this application, the FC is constructed based on the order information, in the message list, of the list element corresponding to the first message in the message list, so that explicit carrying of a measurement round index (Round Index) can be avoided, and signaling overheads can be reduced.

In a possible implementation of the sixth aspect, the constructing the frame count FC based on the order information, in the message list, of the list element corresponding to the first message in the message list includes: constructing the FC based on a measurement slot identifier corresponding to the first message, the order information, and a measurement block identifier corresponding to the first message.

In a possible implementation of the sixth aspect, the constructing the frame count FC based on the order information, in the message list, of the list element corresponding to the first message in the message list includes: constructing the FC based on a first field in the first message, the order information, and a measurement block identifier corresponding to the first message.

In a possible implementation of the fourth aspect, the fifth aspect, or the sixth aspect, different list elements in the message list correspond to different devices.

In a possible implementation of the fourth aspect, the fifth aspect, or the sixth aspect, each list element in the message list includes a device identifier.

In a possible implementation of the fourth aspect, the fifth aspect, or the sixth aspect, the message list is included in a third message sent before the first message is sent.

In a possible implementation of the fourth aspect, the fifth aspect, or the sixth aspect, the third message is an ADV-CONF message in an NBA-MMS UWB measurement process.

In a possible implementation of the fourth aspect, the fifth aspect, or the sixth aspect, the indication information further indicates whether the first message includes a measurement round identifier.

In this implementation, the indication information further indicates whether the first message includes the measurement round identifier, so that a receive end learns, based on the indication information, whether the first message includes the measurement round identifier.

In a possible implementation of the fourth aspect, the fifth aspect, or the sixth aspect, the indication information further indicates whether the first message includes the measurement block identifier.

In this implementation, the indication information further indicates whether the first message includes the measurement block identifier, so that the receive end learns, based on the indication information, whether the first message includes the measurement block identifier.

In a possible implementation of the fourth aspect, the fifth aspect, or the sixth aspect, the indication information is included in the first message.

In a possible implementation of the fourth aspect, the fifth aspect, or the sixth aspect, the first message is a message in a compressed PSDU format.

In a possible implementation of the fourth aspect, the fifth aspect, or the sixth aspect, the first message is a control message in the NBA-MMS UWB measurement process.

In a possible implementation of the fourth aspect, the fifth aspect, or the sixth aspect, the first message is any one of an SOR message, a polling/initiating POLL message, a report message, or a response message.

According to a seventh aspect, an embodiment of this application provides a communication apparatus. The communication apparatus has a function of implementing behavior in the method embodiment in the first aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate indication information, where the indication information indicates to construct an FC based on a first field in a first message, and the first field indicates a type of the first message. The transceiver module is configured to send the indication information.

In a possible implementation of the seventh aspect, the transceiver module is further configured to send a second message, where the second message includes a second field that indicates a timeout for receiving an SOR message.

For possible implementations of the communication apparatus in the seventh aspect, refer to the possible implementations of the first aspect.

For technical effects brought by the possible implementations of the seventh aspect, refer to descriptions of the technical effects of the first aspect or the possible implementations of the first aspect.

According to an eighth aspect, an embodiment of this application provides a communication apparatus. The communication apparatus has a function of implementing behavior in the method embodiment in the second aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive indication information, where the indication information indicates to construct an FC based on a first field in a first message, and the first field indicates a type of the first message. The processing module is configured to construct the FC based on the indication information.

In a possible implementation of the eighth aspect, the processing module is specifically configured to construct the FC based on the indication information, the first field, a measurement round identifier corresponding to the first message, and a measurement block identifier corresponding to the first message.

In a possible implementation of the eighth aspect, the transceiver module is specifically configured to receive the first message, where the first message includes the indication information.

For possible implementations of the communication apparatus in the eighth aspect, refer to the possible implementations of the second aspect.

For technical effects brought by the possible implementations of the eighth aspect, refer to descriptions of the technical effects of the second aspect or the possible implementations of the second aspect.

According to a ninth aspect, an embodiment of this application provides a communication apparatus. The communication apparatus has a function of implementing a behavior in the method embodiment in the third aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message. The processing module is configured to construct an FC based on a first field in the first message, where the first field indicates a type of the first message.

In a possible implementation of the ninth aspect, the processing module is specifically configured to construct the FC based on the first field, a measurement round identifier corresponding to the first message, and a measurement block identifier corresponding to the first message.

In a possible implementation of the ninth aspect, the processing module is specifically configured to construct the FC based on the first field and order information, in a message list, of a list element corresponding to the first message in the message list.

For possible implementations of the communication apparatus in the ninth aspect, refer to the possible implementations of the third aspect.

For technical effects brought by the possible implementations of the ninth aspect, refer to descriptions of the technical effects of the third aspect or the possible implementations of the third aspect.

According to a tenth aspect, an embodiment of this application provides a communication apparatus. The communication apparatus has a function of implementing a behavior in the method embodiment in the fourth aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate indication information, where the indication information indicates to construct an FC based on order information, in a message list, of a list element corresponding to a first message in the message list. The transceiver module is configured to send the indication information.

For possible implementations of the communication apparatus in the tenth aspect, refer to the possible implementations of the fourth aspect.

For technical effects brought by the possible implementations of the tenth aspect, refer to descriptions of the technical effects of the fourth aspect or the possible implementations of the fourth aspect.

According to an eleventh aspect, an embodiment of this application provides a communication apparatus. The communication apparatus has a function of implementing behavior in the method embodiment in the fifth aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive indication information, where the indication information indicates to construct an FC based on order information, in a message list, of a list element corresponding to a first message in the message list. The processing module is configured to construct the FC based on the indication information.

In a possible implementation of the eleventh aspect, the processing module is specifically configured to construct the FC based on the indication information, a measurement slot identifier corresponding to the first message, the order information, and a measurement block identifier corresponding to the first message.

For possible implementations of the communication apparatus in the eleventh aspect, refer to the possible implementations of the fifth aspect.

For technical effects brought by the possible implementations of the eleventh aspect, refer to descriptions of the technical effects of the fifth aspect or the possible implementations of the fifth aspect.

According to a twelfth aspect, an embodiment of this application provides a communication apparatus. The communication apparatus has a function of implementing behavior in the method embodiment in the sixth aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message. The processing module is configured to construct an FC based on order information, in a message list, of a list element corresponding to the first message in the message list.

In a possible implementation of the twelfth aspect, the processing module is specifically configured to construct the FC based on a measurement slot identifier corresponding to the first message, the order information, and a measurement block identifier corresponding to the first message.

In a possible implementation of the twelfth aspect, the processing module is specifically configured to construct the FC based on a first field in the first message, the order information, and a measurement block identifier corresponding to the first message.

For possible implementations of the communication apparatus in the twelfth aspect, refer to the possible implementations of the sixth aspect.

For technical effects brought by the possible implementations of the twelfth aspect, refer to descriptions of the technical effects of the sixth aspect or the possible implementations of the sixth aspect.

According to a thirteenth aspect, an embodiment of this application provides another communication apparatus. The communication apparatus includes a processor, the processor is coupled to a memory, the memory is configured to store a program or instructions, and when the program or the instructions are executed by the processor, the communication apparatus is enabled to perform the method according to any one of the first aspect to the sixth aspect.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, the information may further require other processing, and then reaches the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in the first aspect or any possible implementation of the first aspect.

In a possible implementation, the memory is located outside the communication apparatus. In a possible implementation, the memory is located in the communication apparatus.

In a possible implementation, the processor and the memory may alternatively be integrated into one device, that is, the processor and the memory may alternatively be integrated together.

In a possible implementation, the communication apparatus further includes the transceiver. The transceiver is configured to receive a signal, send a signal, or the like.

According to a fourteenth aspect, an embodiment of this application provides another communication apparatus. The communication apparatus includes a processing circuit and an interface circuit, the interface circuit is configured to obtain data or output data, and the processing circuit is configured to perform the method according to any one of the first aspect to the sixth aspect.

According to a fifteenth aspect, an embodiment of this application provides a computer-readable storage medium. The computer-readable storage medium stores a computer program, the computer program includes program instructions, and when the program instructions are executed, a computer is enabled to perform the method according to any one of the first aspect to the sixth aspect.

According to a sixteenth aspect, an embodiment of this application provides a computer program product. The computer program product includes a computer program, the computer program includes program instructions, and when the program instructions are executed, a computer is enabled to perform the method according to any one of the first aspect to the sixth aspect.

According to a seventeenth aspect, an embodiment of this application provides a communication system, including the communication apparatus according to any one of the seventh aspect or the possible implementations of the seventh aspect and the communication apparatus according to any one of the eighth aspect or the possible implementations of the eighth aspect.

According to an eighteenth aspect, an embodiment of this application provides a communication system, including the communication apparatus according to any one of the tenth aspect or the possible implementations of the tenth aspect and the communication apparatus according to any one of the eleventh aspect or the possible implementations of the eleventh aspect.

According to a nineteenth aspect, an embodiment of this application provides a chip, including a processor and a communication interface. The processor reads, through the communication interface, instructions stored in a memory, to perform the method according to any one of the first aspect to the sixth aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of each phase in a ranging round in the conventional technology;
FIG. 2 is a diagram of a ranging block in the conventional technology;
FIG. 3 is a diagram of an initialization process of NBA-MMS UWB ranging;
FIG. 4A is a diagram of one-to-many NBA-MMS UWB ranging;
FIG. 4B is a diagram of one-to-many NBA-MMS UWB ranging in an interlacing mode;
FIG. 5 is a diagram of an example of a star topology structure;
FIG. 6 is a diagram of an example of a point-to-point topology structure or a mesh topology structure;
FIG. 7 shows an example of a UWB system to which a technical solution according to an embodiment of this application is applicable;
FIG. 8 is an interaction flowchart of a communication method for a UWB according to an embodiment of this application;
FIG. 9 is a diagram of an NBA-MMS UWB ranging process according to an embodiment of this application;
FIG. 10 shows an interaction procedure of another communication method for a UWB according to an embodiment of this application;
FIG. 11 shows an interaction procedure of another communication method for a UWB according to an embodiment of this application;
FIG. 12 shows an interaction procedure of another communication method for a UWB according to an embodiment of this application;
FIG. 13 is a diagram of an initialization process of pre-configuring one-to-many NBA-MMS UWB ranging;
FIG. 14 shows an interaction procedure of another communication method for a UWB according to an embodiment of this application;
FIG. 15 shows an interaction procedure of another communication method for a UWB according to an embodiment of this application;
FIG. 16 is a diagram of a structure of a communication apparatus 1600 according to an embodiment of this application;
FIG. 17 is a diagram of a structure of another communication apparatus 170 according to an embodiment of this application; and
FIG. 18 is a diagram of a structure of another communication apparatus 180 according to an embodiment of this application.

### DESCRIPTION OF EMBODIMENTS

In the specification, claims, or accompanying drawings of this application, the terms "first", "second", and the like are intended only to distinguish between different objects but do not indicate a particular order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in the specification may be combined with another embodiment.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" generally represents an "or" relationship between associated objects.

It may be understood that in embodiments of this application, "B corresponding to A" indicates that there is a correspondence between A and B, and B may be determined based on A. However, it should also be understood that determining (or generating) B based on (or based on) A does not mean that B is determined (or generated) based on (or based on) A only, and B may alternatively be determined (or generated) based on (or based on) A and/or other information.

For ease of understanding the solutions of this application, the following first describes terms and technical solutions in embodiments of this application.

Ranging round (ranging round), positioning round (positioning round), sensing round (sensing round), and measurement period

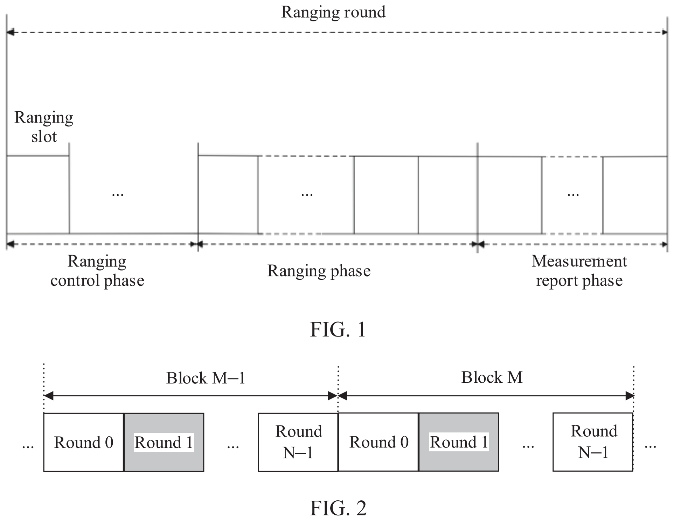

In the IEEE 802.15.4z standard, a single ranging process is defined as a ranging round (ranging round). In the IEEE 802.15.4z standard, the ranging round is defined as: The ranging round is a time period that is sufficient to complete a complete ranging task, and the time period relates to a group of ERDEVs that participate in ranging exchange (a ranging round is a period of sufficient duration to complete one entire range-measurement cycle involving the set of ERDEVs participating in the ranging exchange). A minimum processing time unit of each ranging round is a ranging slot (ranging slot). One ranging round can be divided into three phases: a ranging control phase (ranging control phase), a ranging phase (ranging phase), and a measurement report phase (measurement report phase). FIG. 1 is a diagram of each phase in a ranging round in the conventional technology. Details are shown in FIG. 1. In the IEEE 802.15.4z standard, the ranging control phase includes one ranging slot. However, in the IEEE 802.15.4ab standard that is currently under discussion and formulation, the ranging control phase may include more than one ranging slot.

In a 1^{st} slot of the ranging round shown in FIG. 1, a controller sends a ranging control message (ranging control message, RCM). The RCM may carry an update message about a round structure of the ranging round, for example, update of duration (round duration) of the ranging round.

Current and previous ranging rounds (referred to as round for short below) may be adjacent in time, or not adjacent in time. Duration values of different rounds may be the same, or may be different. The following uses an example in which duration values of different rounds are the same for description by default.

FIG. 2 shows a case in which the current and previous ranging rounds (referred to as round for short below) are not adjacent in time. FIG. 2 is a diagram of a ranging block in the conventional technology. As shown in FIG. 2, the ranging block may be a time structure including a plurality of ranging rounds. Optionally, the ranging block repeatedly appears in a periodic manner. Optionally, duration lengths of all ranging rounds in the ranging block are equal. As shown in FIG. 2, for a specific ranging process, an initiator (initiator) and a responder (responder) perform the ranging process in a ranging round in a ranging block (ranging block), for example, a round 1 shown in FIG. 2. In this application, the initiator may be referred to as an initiator, that is, a UWB device that initiates a ranging/sensing/communication procedure. In the ranging/sensing/communication process, an initiator may be a transmit end, or may be a receive end. In this application, the initiator may be referred to as a responder, and is a UWB device that responds to the ranging/sensing/communication process initiated by the UWB initiator device. In the ranging/sensing/communication process, the responder may be a transmit end, or may be a receive end. After the ranging round is completed, the specific ranging process is performed in a round 1 in a next ranging block. It can be learned from FIG. 2 that two adjacent rounds 1 are not adjacent in time, that is, there is a time interval between the two adjacent rounds 1. In the interval slot between the two adjacent rounds 1, the device may turn off the receiver to sleep, to save power consumption. Duration values of adjacent ranging blocks may be the same, or may be different. For example, adjacent ranging blocks with different duration values may be located in a hyper-block (hyper-block). The following uses an example in which duration values of adjacent ranging blocks are the same for description by default.

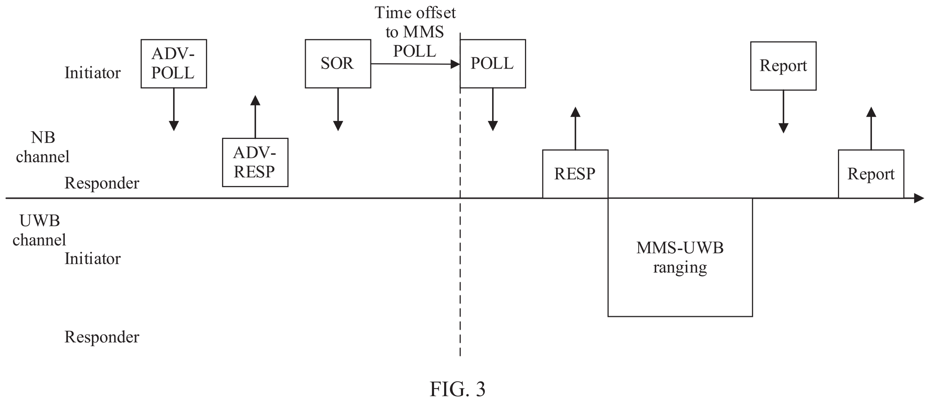

Before NBA-MMS UWB ranging is performed (or enabled), initialization and establishment processes need to be performed (or executed) between related devices. For example, the initiator is the controller. The initiator needs to first broadcast a notification message to notify all responders that the NBA-MMS UWB ranging needs to be performed currently. The broadcast notification message may be carried in an advertisement polling message/advertisement initiating (advertisement poll, ADV-POLL) message. After receiving the ADV-POLL message, the responder returns an advertisement response message/advertisement response (advertisement response, ADV-RESP) message to the initiator if the ranging needs to be performed. In the ADV-RESP message, the responder carries parameter configuration information required by the responder. After receiving the ADV-RESP message, the initiator may decide whether to accept a parameter configuration proposed by the responder, and may notify the responder of a final parameter configuration result through a start-of-ranging (start-of-ranging, SOR) message. The SOR message may carry a parameter acknowledgment message for the ADV-RESP message of the responder, or carry a change/update message for a parameter in the ADV-RESP message of the responder. After the responder receives the SOR message for a period of time, the initiator and the responder may start the NBA-MMS UWB ranging process. A length of the period of time may be determined by Time offset to MMS POLL information in the SOR message. The initialization process of the NBA-MMS UWB ranging described above is shown in FIG. 3. FIG. 3 is a diagram of an initialization process of NBA-MMS UWB ranging.

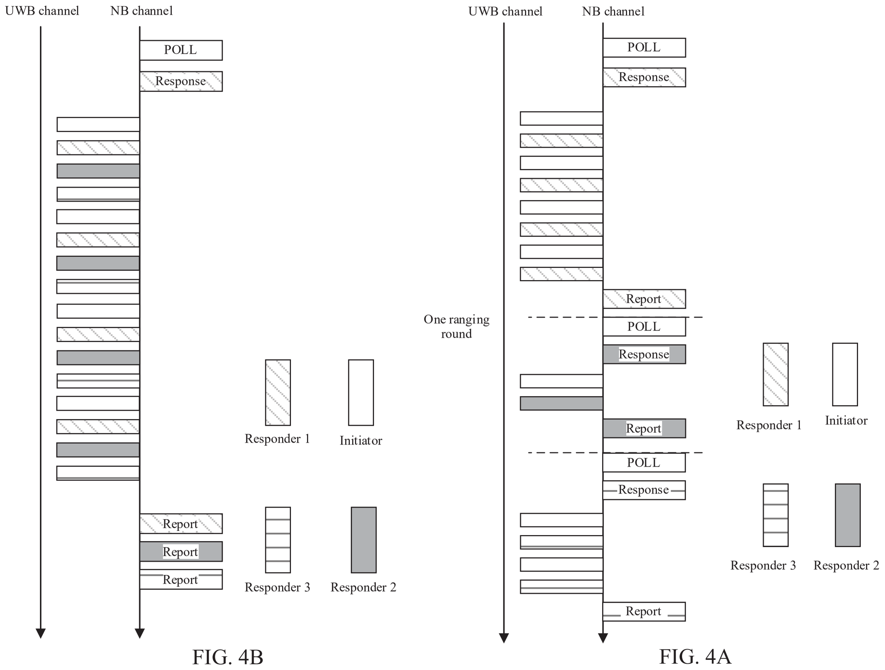

An application scenario of the NBA-MMS UWB ranging may be a one-to-one scenario, that is, one initiator corresponds to one responder, or may be a one-to-many (one-to-many) scenario, that is, one initiator corresponds to a plurality of responders, as shown in FIG. 4A. FIG. 4A is a diagram of one-to-many NBA-MMS UWB ranging.

In the one-to-many NBA-MMS UWB ranging shown in FIG. 4A, the initiator and each responder perform the NBA-MMS UWB ranging one by one. In other words, the initiator and each responder complete an interaction process of interaction of a polling/initiating (POLL) message and a response (response, RESP) message, multi-millisecond (multi-millisecond, MMS) block division interaction, ranging, and ranging result report (carried in a Report message). In this specification, the response message may be referred to as an RESP message, or may be referred to as a Response message, or may be referred to as a RESPONSE message. The ranging result report includes a Report message sent by the responder to the initiator and a Report message sent by the initiator to the responder. The ranging process shown in FIG. 4A may be referred to as one-to-many NBA-MMS UWB ranging in a concatenating (concatenate) mode. It should be noted that this application is also applicable to a one-to-many ranging process in another mode, for example, one-to-many NBA-MMS UWB ranging in an interlacing (interlacing) mode, as shown in FIG. 4B. FIG. 4B is a diagram of one-to-many NBA-MMS UWB ranging in an interlacing mode. As shown in FIG. 4B, in the one-to-many NBA-MMS UWB ranging in the interlacing mode, each responder sequentially sends an MMS sub-block, and a next responder sends all MMS sub-blocks without waiting for a previous responder to complete sending of all MMS sub-blocks. In embodiments of this application, the following uses the one-to-many NBA-MMS UWB in the concatenating mode as an example for description. The method in a related embodiment is also applicable to the one-to-many NBA-MMS UWB process in the interlacing mode, and details are not described.

In this embodiment of this application, a single positioning process, that is, a process of completing a positioning task, is defined as a positioning round. The positioning round may have another name. This is not limited in this application. The positioning round may be a time period (or a time cycle) that is sufficient to complete a complete positioning task. A meaning of the positioning round is similar to that of the ranging round, and a difference lies in that the ranging round is a time period corresponding to ranging, and the positioning round is a time period corresponding to positioning. A minimum processing time unit of each positioning round is a positioning slot (positioning slot). One positioning round can be divided into three phases: a positioning control phase (positioning control phase), a positioning phase (positioning phase), and a positioning report phase (positioning report phase).

In this embodiment of this application, a single sensing process, that is, a process of completing a sensing task, is defined as a sensing round. The sensing round may have another name. This is not limited in this application. The sensing round may be a time period (or a time cycle) that is sufficient to complete a complete sensing task. A meaning of the sensing round is similar to that of the ranging round, and a difference lies in that the ranging round is a time period corresponding to ranging, and the sensing round is a time period corresponding to sensing. A minimum processing time unit of each sensing round is a sensing slot (sensing slot). One sensing round can be divided into three phases: a sensing control phase (sensing control phase), a sensing phase (sensing phase), and a sensing report phase (sensing report phase).

A measurement period is a time period in which one or more UWB devices complete one or more measurement tasks. The measurement task herein may be a ranging task, a positioning task, a sensing task, or the like. The measurement period may be a ranging round, a positioning round, or a sensing round. It should be noted that the ranging round in the following may be replaced with a sensing round, a positioning round, or a measurement period (which may be referred to as a measurement round). Correspondingly, the ranging task may be replaced with a sensing task, a positioning task, or a measurement task.

In addition, it should be further noted that names of different phases in a single measurement round (for example, a ranging round, a sensing round, or a positioning round) are merely examples, and do not constitute any limitation on the protection scope of this application. For example, the foregoing measurement control phase may be understood as a phase used to configure a parameter required in the measurement round. For another example, the measurement phase may be understood as a phase used to perform measurement. For another example, the measurement result report phase may be understood as a phase used to report the measurement result, and may alternatively be referred to as an end of the measurement phase. In addition, it should be further noted that, in embodiments of this application, a size of each field indicates a number of bits occupied by each field.

Format of a compressed header information element message

To reduce a duty cycle of an NB signal, an ADV-POLL message, an ADV-RESP message, an SOR message, and a report (Report) message may be carried based on a compressed header information element (compressed header information element, compressed header IE) message, as shown in Table 1-1 below. Table 1-1 shows an example of a format of a compressed header information element message.

**Table 1-1**

| | | |
|---|---|---|
| SHR | PHR | Compressed PSDU |

SHR (synchronization header) represents a synchronization header, PHR represents a PHY header, PSDU (PHY service data unit) represents a physical layer service data unit, and PHY (physical layer) represents a physical layer. Table 1-2 shows an example format of the compressed PSDU.

**Table 1-2**

| Octets: 1 | Octets: 2 | Octets: 1 | Variable | Octets: 2 |
|---|---|---|---|---|
| Frame Control | Address | Message ID | Content | CRC |

The Frame Control (frame control) field is used to control the format of the header information element (header IE). The Frame Control field occupies 1 byte (Octets/Bytes).

The Address field indicates a device address of a device that receives the message shown in Table 1-1. The Address field occupies 2 bytes.

The Message ID field (which may be referred to as a message identification field) indicates a type of the message shown in Table 1-1. In other words, the Message ID field indicates a type of message corresponding to the current compressed PSDU field. For example, the Message ID field indicates a type and a size of data content carried in the content (Content) field in Table 1-2. In the example shown in Table 1-2, the Message ID field occupies 1 byte. The Content field indicates the data content carried by the compressed PSDU. A value of the field is a variable (variable) value, and is determined by message content corresponding to the Message ID field.

The CRC field is also referred to as a cyclic redundancy check (cyclic redundancy check, CRC) field, and is a field used to detect errors of the compressed PSDU in Table 1-2. The CRC field occupies 2 bytes.

It can be learned from Table 1-1 and Table 1-2 that a message (or a data packet) in a compressed PSDU format does not include a separate frame count (frame counter, FC) field. Because there is no FC field in the message in the compressed PSDU format, it also means that an FC cannot be directly used to construct a Nonce (a random number used only once). In an authentication protocol, the Nonce is a random number or pseudo-random number to avoid replay attacks. The Nonce is used to encrypt and authenticate a message. In this specification, authentication and verification have a same meaning.

To resolve a problem that in the message in the compressed PSDU format, an FC cannot be directly used to construct the Nonce, an existing technical solution (referred to as the conventional technology) is as follows: Based on different timing structure characteristics of the NBA-MMS ranging in the initialization phase and the measurement period phase (measurement cycle), the Nonce is constructed, in different manners, for the message in the compressed PSDU format transmitted in corresponding phases.

In the conventional technology, a solution in which the Nonce is constructed for the message in the compressed PSDU format in the initialization phase of the NBA-MMS ranging is as follows: For messages transmitted in the initialization phase such as an SOR message, an ADV-POLL message, an ADV-RESP message, and an ADV-CONF message, an explicit packet number (packet number, PN) field is added to an open payload (open payload, that is, non-encrypted payload) part of these messages. The PN field is used to construct the Nonce. In other words, the PN field is used to resolve the foregoing problem of constructing the Nonce for the message in the compressed PSDU format. In Table 2, the SOR message is used as an example. The SOR message includes a PN field. Table 2 is a schematic table of a PSDU format of an SOR message.

**Table 2**

| Bits: 0-6 | 7 | Octets: 2 | 4 | Variable | 2 |
|---|---|---|---|---|---|
| Message ID | Security Enabled = 1 | Address | PN | Secured Payload | MIC |

A meaning of the Message ID field in Table 2 is the same as that of the Message ID field in Table 1-2. The Message ID field in Table 2 occupies 7 bits (bits). A meaning of the Address field in Table 2 is the same as that of the Address field in Table 1-2.

The Security Enable field indicates whether a security encryption measure (for example, encryption/authentication) is used for a current message (namely, the SOR message in Table 2). For example, when a value of the Security Enable field is 0, the Security Enable field indicates that no security encryption measure is used for the current message; or when a value of the Security Enable field is 1, the Security Enable field indicates that a security encryption measure is used for the current message.

The PN field is used by a receive end to construct a Nonce, and the Nonce is used to authenticate the current message. The receive end is a device that receives the SOR message in Table 2. The PN field occupies 4 bits.

The Secured Payload field indicates encrypted content. The Secured Payload field includes encrypted content in the current message. A length of the Secured Payload field is variable.

The MIC (message integrity code) field is used to verify whether a frame is authentic and whether an error occurs. The MIC field occupies 2 bits.

A format of the Nonce based on the PN field shown in Table 2 is shown in Table 3.

**Table 3**

| Octets: 8 | 4 | 1 |
|---|---|---|
| Source Address | PN | Nonce Security Level |

The Source Address field indicates an extension address of a device (namely, a transmit end) that sends a to-be-verified frame.

The PN field is used by the receive end to construct the Nonce. The PN field is used as a missing FC field in the compressed PSDU.

The Nonce Security Level field indicates a security protection measure taken for the message shown in Table 2.

It can be learned from Table 2 that, by introducing the PN field into the SOR message, the FC used in the Nonce shown in Table 3 may be constructed, thereby implementing subsequent encryption/authentication on the frame (namely, the SOR message shown in Table 2).

In the conventional technology, a solution in which the Nonce is constructed for the message in the compressed PSDU format in the measurement period phase of the NBA-MMS ranging is as follows: For messages for a ranging control purpose such as a POLL message, a Response message, and a Report message, the Nonce is constructed based on time sequence information like a slot index/round index/block index of the ranging process that is known in advance. In other words, for the messages for the ranging control purpose such as the POLL message, the Response message, and the Report message, there is no need to add an explicit PN field for constructing the Nonce in an open payload part of these messages. For example, before sending the messages for the ranging control purpose such as the POLL message, the Response message, and the Report message, an SOR message carrying time sequence information like a slot index/round index/block index is sent, and is used for scheduling management and FC construction of the POLL message/Response message/Report message in the measurement period phase (described below). After receiving the SOR message, the receive end may learn, based on the received SOR message, the time sequence information like the slot index/round index/block index related to the ranging process. The Report message shown in Table 4 is used as an example. A format of the Nonce constructed for the Report message is shown in Table 5.

**Table 4**

| Bits: 0-6 | 7 | Octets: 2 | Variable | 4/8 |
|---|---|---|---|---|
| Message ID | Security Enabled = 1 | Address | Encrypted Payload | MIC |

In Table 4, the Message ID field, the Security Enable field, and the Address field are consistent with the fields in Table 2, and details are not described herein again.

**Table 5**

| Octets: 8 | Bits: 0-7 | 8-23 | 24-39 |
|---|---|---|---|
| Source Address | Slot Index | Round Index | Block Index |

In Table 5, the Source Address field indicates an extension address of a device that sends a to-be-verified frame, the Slot Index field indicates a Slot Index (for example, a measurement slot index) corresponding to the to-be-verified frame, the Round Index field indicates a Round Index (for example, a measurement round index) corresponding to the to-be-verified frame, and the Block Index field indicates a Block Index (for example, a measurement block index) corresponding to the to-be-verified frame. It can be learned from Table 5 that the Nonce constructed for the Report message is determined by a sending time sequence corresponding to the Report message, that is, is determined by the slot index/round index/block index. A method for generating an FC of a Nonce is: FC = slot index ∥ round index∥ block index. The symbol "∥" indicates a concatenation operation. For example, it is assumed that a Slot index value is 0x03, a round index value is 0x10, and a block index value is 0x07. In this case, an FC = 0000001100000000000100000000000000000111 (in binary notation) is generated after concatenation. The Slot Index field, the Round Index field, and the Block Index field in Table 5 are all included in the FC. In other words, the Slot Index field, the Round Index field, and the Block Index field in Table 5 are concatenated into the FC. It can be learned that the Nonce is constructed based on the FC.

It can be learned from the foregoing description that, in the existing solution in which the Nonce is constructed for the message in the compressed PSDU format in the initialization phase, the message in the compressed PSDU format (for example, the SOR message) needs to explicitly carry a PN field, and this brings extra signaling overheads. In the existing solution in which the Nonce is constructed for the message in the compressed PSDU format in the measurement period phase, the SOR message and other messages need to explicitly carry the time sequence information like the slot index/round index/block index, and this also brings extra signaling overheads. Because a design idea of the compressed PSDU is to reduce inherent signaling overheads as much as possible, the conventional technology conflicts with the design idea of the compressed PSDU to some extent. This application provides a solution in which a Nonce can be constructed for a message in a compressed PSDU format without increasing signaling overheads. The following first describes a scenario to which a communication solution for a UWB provided in this application is applicable.

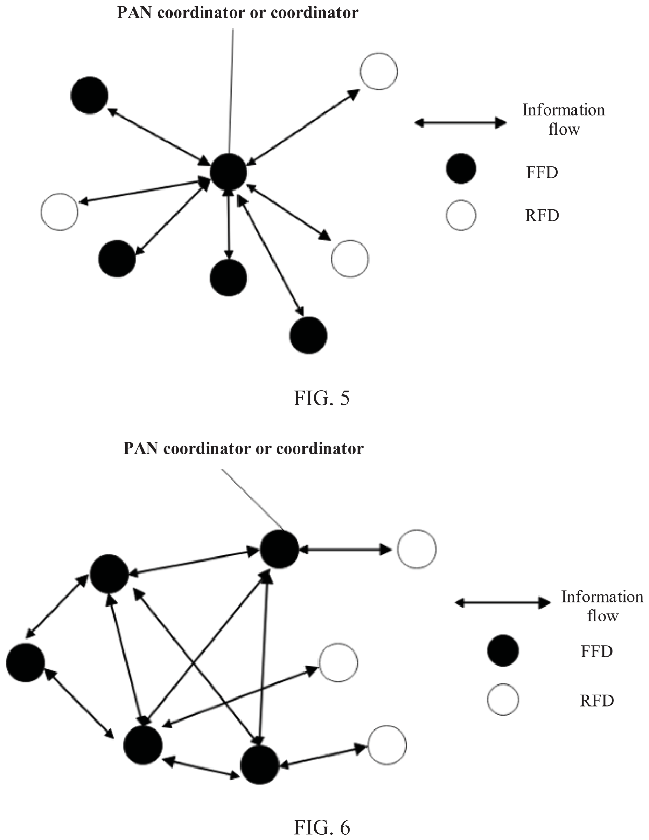

The communication solution for a UWB provided in embodiments of this application may work in a star topology, a point-to-point topology, or a mesh topology structure. The communication solution for a UWB provided in embodiments of this application may further work in another topology structure. This is not limited in this application. FIG. 5 is a diagram of an example of a star topology structure. As shown in FIG. 5, the star topology involves a central control node, for example, a personal area network (personal area network, PAN) or a coordinator shown in FIG. 5. The communication solution for a UWB provided in embodiments of this application is applicable to data communication/sensing/ranging/positioning between the central control node and one or more other devices in the star topology. FIG. 6 is a diagram of an example of a point-to-point topology structure or a mesh topology structure. The communication solution for a UWB provided in embodiments of this application is also applicable to communication/sensing/ranging/positioning between different devices in the point-to-point topology or the mesh topology structure (FIG. 6). In FIG. 5 and FIG. 6, a black node is a full function device (full function device, FFD), and a white node is a reduced function device (reduced function device, RFD). The FFD may serve as the PAN coordinator or the coordinator, but the RFD cannot serve as the PAN coordinator or the coordinator. FFD devices can communicate with each other, and the FFD device and the RFD device can communicate with each other. RFD devices cannot directly communicate with each other, and can only communicate with the FFD device, or forward data externally via one FFD device. In a UWB system, the FFD may be an anchor device or a tag device having a strong computing capability (for example, a UWB tag carried on a smartphone), and the RFD is a tag device, and has only a part of computing capability.

The technical solutions of this application are mainly applicable to a UWB system, for example, a UWB system that supports the IEEE 802.15.4a standard, the IEEE 802.15.4z standard, the IEEE 802.15.4ab standard, or a next-generation standard of the IEEE 802.15.4ab standard. A person skilled in the art easily understands that aspects of this application may be extended to other networks using various standards or protocols, for example, Bluetooth (Bluetooth), highperformance radio LAN (high performance radio LAN, HIPERLAN) (a wireless standard similar to the IEEE 802.11 standard, mainly used in Europe), and a wide area network (WAN), a personal area network (personal area network, PAN), or another network that is known currently or developed in the future. Therefore, regardless of a used coverage area and a used wireless access protocol, the various aspects provided in embodiments of this application are applicable to any appropriate wireless network.

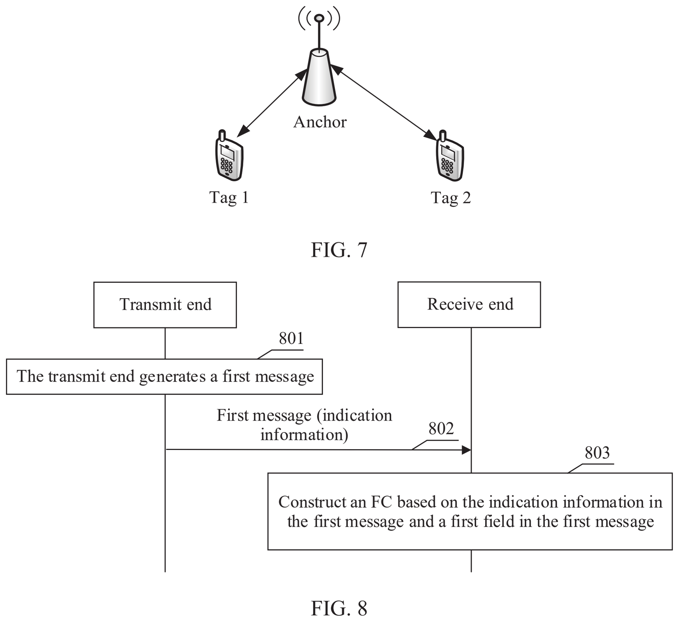

FIG. 7 shows an example of a UWB system to which a technical solution provided in an embodiment of this application is applicable. The UWB system includes an anchor (anchor, only one anchor is shown), and one or more tags (tag, only a tag 1 and a tag 2 are shown). Protocols supported by the anchor and the tag may include protocols such as IEEE 802.15.4a, IEEE 802.15.4z, and IEEE 802.15.4ab. Certainly, with continuous evolution and development of communication technologies, a WLAN protocol may further include a next-generation protocol of IEEE 802.15.4ab, or the like. The anchor may be an access point, and the tag may be a station (Station, STA). Both the access point and the STA support the WLAN protocol, and the WLAN protocol may include IEEE 802.11be (or referred to as Wi-Fi 7, EHT protocol).

The access point is an apparatus having a wireless communication function, supports communication according to the WLAN protocol, and has a function of communicating with another device (for example, a station or another access point) in a WLAN network. Certainly, the access point may further have a function of communicating with another device. The UWB system includes one or more access point (access point, AP) stations and one or more non-access point stations (none access point station, non-AP STA). For ease of description, in this specification, an access point station is referred to as an access point (AP), and a non-access point station is referred to as a station (STA).

The access point may be an entire device, or may be a chip, a processing system, or the like installed in the entire device. The device in which the chip or the processing system is installed may implement a method and a function in embodiments of this application under control of the chip or the processing system (that is, the AP). The AP in embodiments of this application is an apparatus that provides a service for a station (Station, STA), and may support, for example, IEEE 802.15.4a, IEEE 802.15.4z, IEEE 802.15.4ab, or a next generation of IEEE 802.15.4ab. For example, the AP may be a communication entity like a communication server, a router, a switch, a bridge, a computer, a mobile phone, or the like. The AP may include an anchor (anchor), a macro base station, a micro base station (also referred to as a small cell), a pico base station, a femto base station, a relay station, an access point, a gNB, a transmission and reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in devices in various forms, to implement the method and the function in embodiments of this application.

The station is an apparatus having a wireless communication function, supports communication according to the WLAN protocol, and has a capability of communicating with another station or access point in the WLAN network. For example, the STA is any communication apparatus that allows a user to communicate with the AP and further communicate with the WLAN. The communication apparatus may be an entire device, or may be a chip, a processing system, or the like installed in the entire device. The device in which the chip or the processing system is installed may implement a method and a function in embodiments of this application under control of the chip or the processing system (that is, the station). The STA may include a tag (tag) device/smart tag (smart tag) device, a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in autonomous driving (self drive), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The station may include various handheld devices, vehicle-mounted devices, wearable devices, or computing devices that have a wireless communication function, or other processing devices connected to a wireless modem. For example, the station may be a handheld device (handset), a vehicle-mounted device, a wearable device, a terminal in the internet of things or a vehicle-to-everything network, a terminal in any form in 5G and a communication system evolved after 5G, or the like that has a wireless communication function. This is not limited in this application. The station may support IEEE 802.15 series protocols, such as IEEE 802.15.4a, IEEE 802.15.4z, and IEEE 802.15.4ab.

Unless otherwise specified, the following uses an example in which an initiator (initiator) is a controller (controller) for description by default. Correspondingly, the method provided in this application is applicable to a case in which a responder (responder) is a controller or a case in which a controller is a third-party device. In addition, unless otherwise specified, the following uses a one-to-many (one-to-many) case for description by default, that is, a case in which one initiator corresponds to a plurality of responders. Correspondingly, the method provided in this application is applicable to a case in which a plurality of initiators correspond to a plurality of responders. In addition, unless otherwise specified, the following uses an example in which the initiator broadcasts a configuration update message of a measurement round (for example, a ranging round) to all responders based on a measurement initiation message (for example, an SOR message) before each measurement round starts for description by default. Correspondingly, after receiving the configuration update message of the measurement round, the responder completes parameter update configuration, and starts measurement in this round and measurement in a subsequent measurement round based on a new parameter (until a next parameter update configuration). Correspondingly, the method provided in this application is applicable to a case in which the initiator broadcasts the measurement initiation message at another moment, for example, a case in which the initiator broadcasts the configuration update message of the measurement round based on the measurement initiation message in a measurement report phase in each measurement round.

In addition, unless otherwise specified, the following uses an example in which the measurement initiation message is used to carry the configuration update message of the measurement round for sending for description by default. The corresponding description is also applicable to a case in which another message is used to carry the configuration update message of the measurement round for sending. For example, in the NBA-MMS UWB ranging, the method provided in this application is applicable to a case in which the initiator sends a POLL message that carries the configuration update message of the measurement round to the responder. For example, in the one-to-many NBA-MMS UWB ranging, the initiator sends a POLL message that carries the configuration update message of the ranging round to a first responder. The first responder is a responder that first performs ranging with the initiator in a time sequence among the plurality of responders. In this case, the POLL message is sent in a broadcast manner. For another example, in the NBA-MMS UWB ranging, the responder sends a Response message that carries the configuration update message of the measurement round to the initiator. For another example, in the NBA-MMS UWB ranging, the initiator (responder) sends a Report message that carries the configuration update message of the measurement round to the responder (initiator). The method provided in this application is applicable to all the foregoing examples. In addition, for ease of description, the following uses an example in which it is assumed that in a first measurement initiation message, a sequence of list elements is consistent with a sequence of subscripts of devices for description by default, that is, list elements #0, #1, ..., and #N respectively correspond to a device 0, a device 1, ..., and a device N. The corresponding description is also applicable to another case. For example, the method provided in this application is applicable to a case in which list elements #0, #1, ..., and #N respectively correspond to a device 2, a device 4, ..., and a device N. In addition, unless otherwise specified, the following uses a ranging process as an example by default. Correspondingly, the method provided in this application is applicable to another measurement process, like sensing and positioning. In other words, the following uses an example in which a measurement process is a ranging process for description. In addition, unless otherwise specified, the following uses a case in which a current round and a previous round are not adjacent in time by default. Correspondingly, the method provided in this application is applicable to a case in which rounds are adjacent in time.

In addition, unless otherwise specified, the following uses NBA-MMS UWB ranging as an example for description by default. The corresponding description is also applicable to another measurement application like ranging, sensing, and positioning. The other ranging includes but is not limited to: non-NBA-MMS ranging (including neither NBA ranging nor MMS ranging) and MMS ranging (excluding NBA ranging but including MMS ranging).

FIG. 8 is an interaction flowchart of a communication method for a UWB according to an embodiment of this application. The method shown in FIG. 8 may be applied to scenarios such as ranging, sensing, positioning, and communication, for example, scenarios such as NBA-MMS-based ranging, NBA-MMS-based sensing, and NBA-MMS-based positioning. As shown in FIG. 8, the method includes the following steps.

801: A transmit end generates a first message.

The transmit end may be a UWB device that supports a UWB standard. The transmit end may be an AP, or may be a station. The transmit end may be an FFD, or may be an RFD. The transmit end may be an initiator (initiator) of ranging, sensing, positioning, or communication, that is, a ranging initiator, a sensing initiator, a positioning initiator, or a communication initiator; or may be a responder (responder) of ranging, sensing, positioning, or communication, that is, a ranging responder, a sensing responder, a positioning responder, or a communication responder; or may be a third-party device (which may be referred to as a controller device), that is, not an initiator or a responder (responder) of ranging, sensing, positioning, or communication. For related descriptions of the transmit end in the following, refer to step 801.

The first message includes indication information, where the indication information indicates to construct an FC based on a first field in the first message, and the first field indicates a type of the first message. The FC constructed based on the first field in the first message may be used to construct a Nonce used to encrypt or authenticate the first message. The first message may be a message in a compressed PSDU format. For example, the first message is a control message in an NBA-MMS UWB measurement process, for example, an ADV-POLL message, an ADV-RESP message, an ADV-CONF message, an SOR message, a POLL message, a Response message, or a Report message (which may be referred to as a report message). In this application, the NBA-MMS UWB measurement includes at least one of NBA-MMS UWB ranging, NBA-MMS UWB sensing, NBA-MMS UWB positioning, and the like. The first field may be a Message ID field. For example, the first message is the SOR message shown in Table 2, and the first field is the Message ID field. For another example, the first message is the Report message shown in Table 4, and the first field is the Message ID field. The POLL message may alternatively be referred to as an inquiry message. A name of the POLL message is not limited in this application. The indication information may occupy one or more bits in the first message. When a value represented by the one or more bits is 1, the indication information indicates to construct the FC based on the first field in the first message; or when a value represented by the one or more bits is 0, the indication information indicates to construct the FC in another manner, for example, construct the FC based on a slot index, a round index, and a block index that correspond to the first message, or indicates to construct the FC based on a PN field in the first message. Alternatively, when a value of the indication information (that is, a value represented by the one or more bits occupied by the indication information) is 0, the indication information indicates to construct the FC based on the first field in the first message; or when a value of the indication information is 1, the indication information indicates to construct the FC in another manner.

A number of bits occupied by the indication information may be less than 4, that is, less than a number of bits occupied by the PN field (refer to Table 2 and Table 3). For example, the indication information occupies 1 bit or 2 bits. Therefore, in comparison with those of an existing solution in which the PN field is explicitly carried, signaling overheads of the solution in which the first message includes the indication information are low. The following describes a possible format of the first message by using an example in which the first message is the POLL message. Table 6 shows an example of a PSDU format of a POLL message.

**Table 6**

| Bits: 0-6 | 7 | Octets: 2 | 1/3/Octet: 1 | 0/2 | 0/2 | Variable | 4/8 |
|---|---|---|---|---|---|---|---|
| Message ID | Security Enabled = 1 | Address | Presence Control | Block Index | Round Index | Secured Payload | MIC |

In Table 6, the Message ID field, the Security Enable field, the Address field, the Secured Payload field, and the MIC field are consistent with the fields in Table 2, and details are not described herein again. The Block Index (block index) field indicates a ranging block corresponding to the POLL message, and the Round Index (round index) field indicates a ranging round corresponding to the POLL message. In this specification, a block index is an example of a measurement block identifier, and a round index is an example of a measurement round identifier. Table 6 may include a Block Index field (occupying 2 bits), or may not include a Block Index field. Table 6 may include a Round Index field (occupying 2 bits), or may not include a Round Index field. The Presence Control field includes the indication information. The Presence Control field may occupy 1 bit, 3 bits, or 1 byte. A location and a size of the Presence Control field are not limited in this application, and a name of the Presence Control field is not limited either. In this specification, a size of a field is a number of bits occupied by the field. In addition, the Presence Control field may be a new field, or may be included in an existing field. It should be understood that Table 6 shows merely an example of the PSDU format of the POLL message, and a location and a size of each field in Table 6 are not limited. Table 7-1, Table 7-2, and Table 7-3 show three examples of the Presence Control field.

**Table 7-1**

| |
|---|
| 1 |
| Presence Control |

Refer to Table 7-1. The Presence Control field occupies 1 bit. The Presence Control field indicates whether to construct the FC based on the first field in the first message. For example, when a value of the Presence Control field is 1, the Presence Control field indicates to construct the FC based on the first field in the first message; or when a value of the Presence Control field is 0, the Presence Control field indicates to construct the FC based on the slot index, the round index, and the block index that correspond to the first message, or indicates to construct the FC based on the PN field in the first message.

**Table 7-2**

| Bits: 0 | 1 | 2 |
|---|---|---|
| Block Index Presence | Round Index Presence | imSI enabled |

Refer to Table 7-2. The Presence Control field includes the Block Index Presence field (occupying 1 bit), the Round Index Presence field (occupying 1 bit), and the imSI enabled field (occupying 1 bit). It should be noted that a size and a location of each field in Table 7-2 are not limited. The Block Index Presence field indicates whether the Block Index field in Table 6 exists. The Round Index Presence field indicates whether the Round Index field in Table 6 exists. It should be noted that the first message shown in Table 6 may not include the Block Index field, and/or the first message shown in Table 6 may not include the Round Index field. When the first message does not include the Block Index field, a value of the Block Index field corresponding to the first message is 0 by default. When the first message does not include the Round Index field, a value of the Round Index field corresponding to the first message is 0 by default. The imSI enabled field indicates whether to construct the FC based on the first field in the first message. For example, when a value of the imSI enabled field is 1, the imSI enabled field indicates to construct the FC based on the first field in the first message; or when a value of the imSI enabled field is 0, the imSI enabled field indicates to construct the FC based on the slot index, the round index, and the block index that correspond to the first message, or indicates to construct the FC based on the PN field in the first message. The imSI enabled field in Table 7-2 may be considered as the indication information.

**Table 7-3**

| Bits: 0 | 1 | 2 | 3-7 |
|---|---|---|---|
| Block Index Presence | Round Index Presence | imSI enabled | RFU |

In Table 7-3, meanings of the Block Index Presence field (occupying 1 bit), the Round Index Presence field (occupying 1 bit), and the imSI enabled field (occupying 1 bit) are the same as those in Table 7-2, and details are not described herein again. The RFU (reserved for future use, reserved for future use, equivalent to reserved) field is a reserved field, that is, a field reserved for future use, and occupies 5 bits. The Presence Control field shown in Table 7-3 occupies 1 byte. The imSI enabled field in Table 7-3 may be considered as the indication information. It should be noted that a size and a location of each field in Table 7-3 are not limited.

802: The transmit end sends the first message.

Correspondingly, a receive end receives the first message. The receive end may be a UWB device that supports a UWB standard. The receive end may be an AP, or may be a station. The receive end may be an FFD, or may be an RFD. The receive end may be an initiator (initiator) of ranging, sensing, positioning, or communication, that is, a ranging initiator, a sensing initiator, a positioning initiator, or a communication initiator; or may be a responder (responder) of ranging, sensing, positioning, or communication, that is, a ranging responder, a sensing responder, a positioning responder, or a communication responder; or may be a third-party device (which may be referred to as a controller device), that is, not an initiator or a responder (responder) of ranging, sensing, positioning, or communication. For example, the transmit end is both an initiator and a controller, and the receive end is a responder. For another example, the transmit end is a controller, and the receive end is a responder. For related descriptions of the receive end in the following, refer to step 802.

In a possible implementation, the transmit end further performs the following operation: sending a second message, where the second message includes a second field that indicates a timeout for receiving the SOR message. Correspondingly, the receive end receives the second message. The receive end may stop monitoring the SOR message after the timeout, indicated by the second field, for receiving the SOR message, to avoid an increase in energy consumption caused by waiting for monitoring the SOR message for a long time. The second message further includes a field that indicates whether the second field exists. The second message is a message sent by the transmit end before the transmit end sends the SOR message (for example, the first message). The second message may be an ADV-CONF message, or may be another message. This is not limited in this application. Herein, an example in which the second message is the ADV-CONF message is used for description. Table 8 shows an example of a PSDU format of an ADV-CONF message including a second field.

**Table 8**

| Bits: 0 | 1 | 2-7 | Octets: Variable | Octets: 1 |
|---|---|---|---|---|
| SOR Message Management (SMM) Presence | SOR transmission timeout Presence | RFU | SOR Message Management | SOR transmission timeout |

In Table 8, the SOR transmission timeout field (namely, the second field) indicates a timeout for the SOR message, and the SOR transmission timeout Presence field indicates whether the second message includes the SOR transmission timeout field, that is, whether the second message includes the SOR transmission timeout field. A unit of the SOR transmission timeout field may be a ranging scheduling time unit (ranging scheduling time unit, RSTU), or may be a slot (slot). The unit of the SOR transmission timeout is not limited in this application. For example, when a value of the SOR transmission timeout Presence field is 1, the second message includes the SOR transmission timeout field, that is, the second message includes the SOR transmission timeout field; or when a value of the SOR transmission timeout Presence field is 0, the second message does not include the SOR transmission timeout field, that is, the second message does not include the SOR transmission timeout field. The SOR Message Management field is a field used to carry and manage an SOR message list. The SOR Message Management (SMM) Presence field (referred to as an SMM Presence field for short below) indicates whether the second message includes the SOR Message Management field. For example, when a value of the SMM Presence field is 1, the second message includes the SOR Message Management field; or when a value of the SMM Presence field is 0, the second message does not include the SOR Message Management field. The RFU field is a reserved field, that is, a field reserved for future use, and may occupy 6 bits. It may be understood that Table 8 shows merely an example of the PSDU in the second message, and a size and a location of each field in the second message are not limited.

803: The receive end constructs the FC based on the indication information in the first message and the first field in the first message.

A possible implementation of step 803 is as follows: Construct the FC based on the indication information in the first message, the first field, a measurement round identifier corresponding to the first message, and a measurement block identifier corresponding to the first message. For example, the receive end concatenates the first field, the measurement round identifier (for example, the round index) corresponding to the first message, and the measurement block identifier (for example, the block index) corresponding to the first message, to obtain the FC. In this example, a method for constructing an FC is: FC = message ID ∥ round index ∥ block index. "∥" indicates a concatenation operation. After constructing the FC, the receive end may construct, based on the FC, the Nonce corresponding to the first message. The Nonce corresponding to the first message is used for encryption or authentication of the first message. The Nonce corresponding to the first message may include a source address (Source Address) and the FC. Table 9-1 shows an example of a Nonce.

**Table 9-1**

| Octets: 8 | Bits: 0-7 | 8-23 | 24-39 |
|---|---|---|---|
| Source Address | Message ID | Round Index | Block Index |

In Table 9-1, the Message ID field, the Round Index field, and the Block Index field form an FC. It should be noted that the method for constructing the FC is not limited in this application, and the method for constructing the FC provided in this specification is merely an example.

In another example, the method for constructing the FC may alternatively be FC = block index ∥ round index ∥ message ID. In other words, a concatenation sequence used for FC construction is not limited in this application.

In another example, the method for constructing the FC may alternatively be FC = prePN ∥ block index ∥ round index ∥ message ID. For another example, the method for constructing the FC may alternatively be FC = prePN ∥ message ID. A prePN (pre-determined Packet Number) represents a value that is agreed upon and stored in advance by the receive end and the transmit end and that can be used to construct the FC. A value of the prePN may be updated according to a specific rule. For example, after a time period of a specific number of blocks, the value of the prePN is increased by 1. A value update rule of the prePN is not limited in this application. In addition, another value that can participate in FC construction is not limited in this application, and the prePN is merely an example. Any case in which the FC is constructed based on the message ID falls within the protection scope of this application.

Another possible implementation of step 803 is as follows: Construct the FC based on the indication information in the first message, the first field, order information, in a message list, of a list element corresponding to the first message in the message list, and a measurement block identifier corresponding to the first message. In this application, when the first message is not the SOR message, the order information, in the message list, of the list element corresponding to the first message in the message list may be: order information, in the message list, of the list element corresponding to the SOR message that corresponds to the first message in the message list. The first message and the SOR message corresponding to the first message correspond to a same device. The indication information indicates to construct the FC based on the first field and the order information, in the message list, of the list element corresponding to the first message in the message list. Refer to related content in Table 11-4 below. Content related to the order information, in the message list, of the list element corresponding to the first message in the message list is described in detail subsequently, and is not described herein. Different list elements in the message list correspond to different devices. Each list element in the message list includes a device identifier, for example, a device address (Device address). The device address is an address of a device. The message list may be included in a third message sent before the first message is sent. For example, the third message is an ADV-CONF message in an NBA-MMS UWB measurement process. The third message may alternatively be another message. This is not limited in this application. An example of the possible implementation is as follows: The receive end concatenates the first field, the order information (for example, CODA values in the following), and the measurement block identifier (for example, the block index) corresponding to the first message, to obtain the FC. In this example, the method for constructing the FC is FC = message ID ∥ CODA values ∥ block index. "∥" indicates a concatenation operation. The CODA values may be values indicating an order, in the message list, of the list elements corresponding to the first message in the message list, for example, #1, #2, and #3. After constructing the FC, the receive end may construct, based on the FC, the Nonce corresponding to the first message. The Nonce corresponding to the first message is used for encryption or authentication of the first message. Table 9-2 shows an example of a Nonce.

**Table 9-2**

| Octets: 8 | Bits: 0-7 | 8-23 | 24-39 |
|---|---|---|---|
| Source Address | Message ID | CODA values | Block Index |

In Table 9-2, the Message ID field, the CODA values field, and the Block Index field form an FC.

In another example, the method for constructing the FC may alternatively be FC = block index ∥ CODA values ∥ message ID. In other words, a concatenation sequence used for FC construction is not limited in this application.

In another example, the method for constructing the FC may alternatively be FC = prePN ∥ block index ∥ CODA values ∥ message ID. For another example, the method may alternatively be FC = prePN ∥ CODA values. A prePN represents a value that is agreed upon and stored in advance by the receive end and the transmit end and that can be used to construct the FC. A value of the prePN may be updated according to a specific rule. For example, after a time period of a specific number of blocks, the value of the prePN is increased by 1. A value update rule of the prePN is not limited in the specification. In addition, another value that can participate in FC construction is not limited in this application, and the prePN is merely an example. Any case in which the FC is constructed based on the CODA values falls within the protection scope of this application.

It should be noted that a format of the Nonce is not limited in this application, and Table 9-2 shows merely an example.

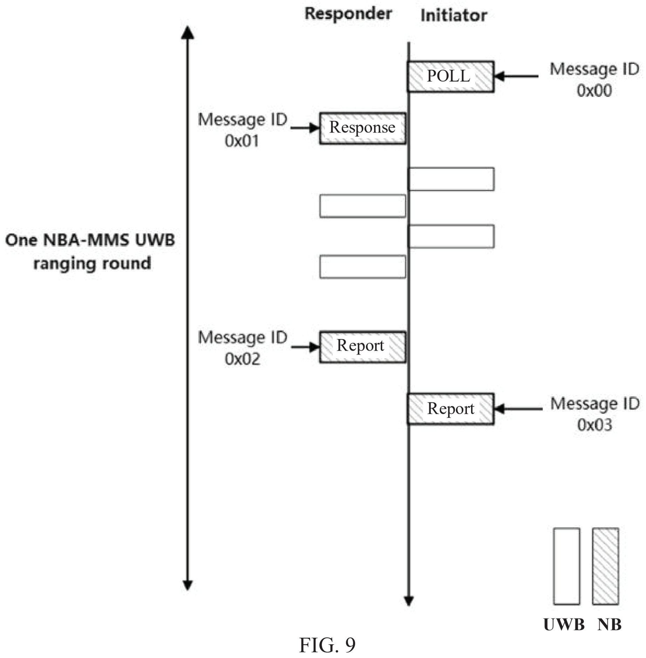

The method procedure in FIG. 8 may be understood as: constructing, based on the first field (message ID) of the control message (namely, the first message), the measurement round identifier corresponding to the control message, and the measurement block identifier corresponding to the control message, the FC corresponding to the control message. The method procedure in FIG. 8 is applicable to scenarios such as NBA-MMS-based ranging, NBA-MMS-based sensing, and NBA-MMS-based positioning. In these scenarios, different control messages in a same measurement round (for example, a ranging round) have different message IDs. In other words, any two control messages have different message IDs. Therefore, different FCs can be constructed for different control messages based on the method procedure in FIG. 8. FIG. 9 is a diagram of an NBA-MMS UWB ranging process according to an embodiment of this application. As shown in FIG. 9, a message ID of a POLL message is 0x00, a message ID of a Response message is 0x01, a message ID of a Report message sent by a responder (Responder) is 0x02, and a message ID of a Report message sent by an initiator (Initiator) is 0x03. It can be learned from FIG. 9 that different control messages in a ranging round have different message IDs. When the method procedure in FIG. 8 is applied to an NBA-MMS UWB ranging scenario, the method procedure in FIG. 8 may be understood as: constructing a required FC based on an inherent sending sequence of each control message in the NBA-MMS UWB ranging process, where the message ID of each control message may be considered as the inherent sending sequence of each control message.

In this embodiment of this application, the indication information indicates to construct the FC based on the first field in the first message. When the indication information is included in the first message, because the indication information occupies fewer bits than the PN field, signaling overheads are low.

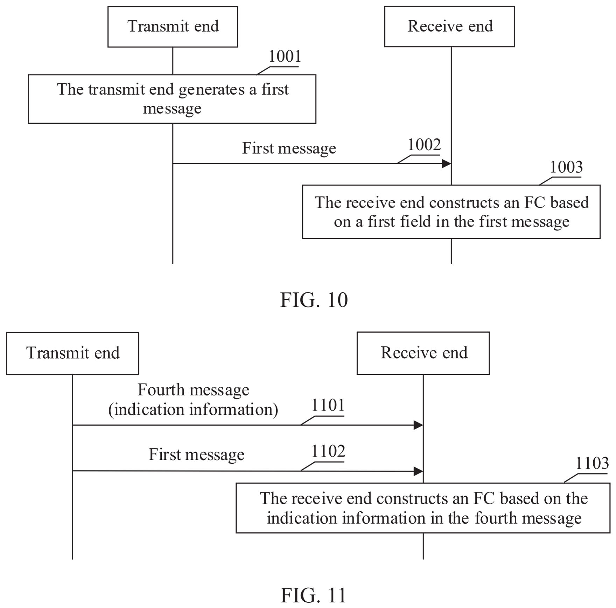

FIG. 10 shows an interaction procedure of another communication method for a UWB according to an embodiment of this application. The method shown in FIG. 10 may be applied to scenarios such as ranging, sensing, positioning, and communication, for example, scenarios such as NBA-MMS-based ranging, NBA-MMS-based sensing, and NBA-MMS-based positioning. In comparison with the method procedure in FIG. 8, in the method procedure in FIG. 10, a first message does not need to carry indication information, and a receive end constructs an FC based on a first field in the first message by default. As shown in FIG. 10, the method includes the following steps.

1001: A transmit end generates the first message.

For step 1001, refer to step 801. In comparison with the first message in the method procedure in FIG. 8, the first message in the method procedure in FIG. 10 does not include the indication information. The first message may be a message in a compressed PSDU format. For example, the first message is a control message in an NBA-MMS UWB measurement process, for example, an ADV-POLL message, an ADV-RESP message, an ADV-CONF message, an SOR message, a POLL message, a Response message, or a Report message (which may be referred to as a report message). In this application, the NBA-MMS UWB measurement includes at least one of NBA-MMS UWB ranging, NBA-MMS UWB sensing, NBA-MMS UWB positioning, and the like. The first message includes the first field. The first field may be a Message ID field. For example, the first message is the SOR message shown in Table 2, and the first field is the Message ID field. For another example, the first message is the Report message shown in Table 4, and the first field is the Message ID field.

1002: The transmit end sends the first message.

Correspondingly, a receive end receives the first message. For step 1002, refer to step 802.

1003: The receive end constructs the FC based on the first field in the first message.

A possible implementation of step 1003 is as follows: constructing the FC based on the first field, a measurement round identifier corresponding to the first message, and a measurement block identifier corresponding to the first message. For example, the receive end concatenates the first field, the measurement round identifier (for example, a round index) corresponding to the first message, and the measurement block identifier (for example, a block index) corresponding to the first message, to obtain the FC. After constructing the FC, the receive end may construct, based on the FC, a Nonce corresponding to the first message. Refer to Table 9. It may be understood that the FC constructed based on the first field in the first message may be used to construct the Nonce used to encrypt or authenticate the first message.

Another possible implementation of step 1003 is as follows: constructing the FC based on the first field, order information, in a message list, of a list element corresponding to the first message in the message list, and a measurement block identifier corresponding to the first message. Content related to the order information, in the message list, of the list element corresponding to the first message in the message list is described in detail subsequently, and is not described herein. For example, the receive end concatenates the first field, the order information (for example, CODA values in the following), and the measurement block identifier (for example, the block index) corresponding to the first message, to obtain the FC. In this example, the method for constructing the FC is FC = message ID ∥ CODA values ∥ block index.

A main principle of the method procedure in FIG. 10 is similar to a main principle of the method procedure in FIG. 8, and details are not described herein again.

In this embodiment of this application, the FC is constructed based on the first field in the first message. The first message does not need to carry a PN field, and signaling overheads are low.

FIG. 11 shows an interaction procedure of another communication method for a UWB according to an embodiment of this application. The method shown in FIG. 11 may be applied to scenarios such as ranging, sensing, positioning, and communication, for example, scenarios such as NBA-MMS-based ranging, NBA-MMS-based sensing, and NBA-MMS-based positioning. In comparison with the method procedure in FIG. 8, in the method procedure in FIG. 11, a first message does not include indication information, and a fourth message sent before the first message includes the indication information. As shown in FIG. 11, the method includes the following steps.

1101: A transmit end sends the fourth message.

Correspondingly, a receive end receives the fourth message. The fourth message includes the indication information, the indication information indicates to construct an FC based on a first field in the first message, and the first field indicates a type of the first message. The indication information may occupy one or more bits. For example, when a value represented by the one or more bits occupied by the indication information is 1, the indication information indicates to construct the FC based on the first field in the first message; or when a value represented by the one or more bits is 0, the indication information indicates to construct the FC in another manner, for example, construct the FC based on a PN field in the first message. The fourth message may include a Presence Control field shown in any one of Table 7-1, Table 7-2, or Table 7-3, and the Presence Control field includes the indication information. This is not described herein again.

The first message may be any message sent by the transmit end or the receive end after the transmit end sends the fourth message. In a possible implementation, after the transmit end sends the fourth message, for any control message sent by the transmit end and the receive end, an FC is constructed based on a first field in the control message. For example, the fourth message is any one of an ADV-POLL message, an ADV-RESP message, an ADV-CONF message, and an SOR message, and the first message is any one of a POLL message, a Response message, or a Report message. For another example, the fourth message is an ADV-POLL message, and the first message is any one of an ADV-RESP message, an ADV-CONF message, and an SOR message. The fourth message may be any message sent by the transmit end or the receive end before the transmit end sends the first message. This is not limited in this application. It may be understood that the indication information indicates to construct, based on a first field in each control message (for example, the first message) that is sent by the transmit end or the receive end after the transmit end sends the fourth message, an FC corresponding to the control message. In other words, the fourth message may indicate a construction manner of an FC corresponding to each control message sent by the transmit end or the receive end after the transmit end sends the fourth message. It may be understood that each message sent by the transmit end or the receive end after the transmit end sends the fourth message does not need to carry the indication information. Bits occupied by the indication information may be less than bits occupied by a slot index field (for example, a field indicating a slot index in the SOR message). In comparison with the slot index field carried in the fourth message, the indication information carried in the fourth message occupies fewer bits, and signaling overheads are less. In addition, the indication information is included in the fourth message, and each message sent by the transmit end after the transmit end sends the fourth message does not need to carry the indication information, so that signaling overheads can be further reduced.

1102: The transmit end sends the first message.

Correspondingly, a receive end receives the first message. The first message includes the first field, for example, a message ID field.

1103: The receive end constructs the FC based on the indication information in the fourth message.

The FC constructed in step 1103 may be used to construct a Nonce used to encrypt or authenticate the first message. A possible implementation of step 1103 is as follows: The receive end constructs the FC based on the indication information in the fourth message, the first field, a measurement round identifier corresponding to the first message, and a measurement block identifier corresponding to the first message. For example, the receive end concatenates, based on the indication information, the first field, the measurement round identifier (for example, a round index) corresponding to the first message, and the measurement block identifier (for example, a block index) corresponding to the first message, to construct the FC. After constructing the FC, the receive end may construct, based on the FC, the Nonce corresponding to the first message.

A main principle of the method procedure in FIG. 11 is similar to the main principle of the method procedure in FIG. 8, and details are not described herein again.

In this embodiment of this application, the indication information in the fourth message indicates to construct the FC based on the first field in the first message. In comparison with the slot index field carried in the fourth message or another message, the indication information in the fourth message occupies fewer bits, and signaling overheads are less. In addition, each message sent by the transmit end after the transmit end sends the fourth message does not need to carry the indication information, so that signaling overheads can be further reduced.

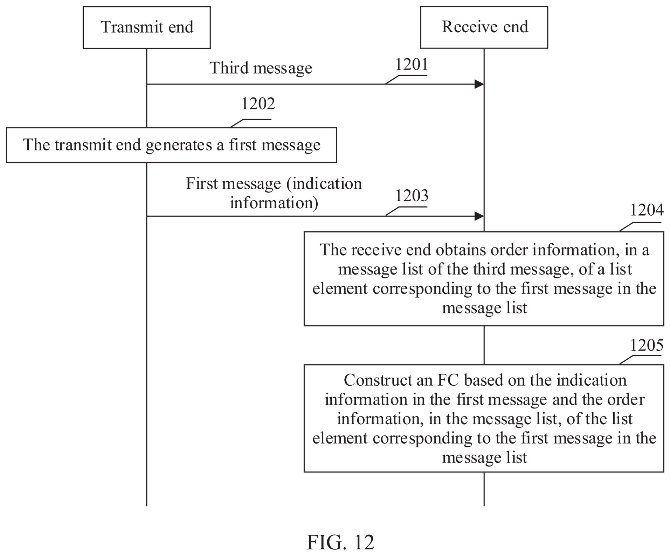

FIG. 12 shows an interaction procedure of another communication method for a UWB according to an embodiment of this application. The method shown in FIG. 12 may be applied to scenarios such as ranging, sensing, positioning, and communication, for example, scenarios such as NBA-MMS-based ranging, NBA-MMS-based sensing, and NBA-MMS-based positioning. In comparison with the method procedure in FIG. 8, in the method procedure in FIG. 12, indication information in a first message indicates to construct an FC based on order information, in a message list, of a list element corresponding to the first message in the message list. As shown in FIG. 12, the method includes the following steps.

1201: A transmit end sends a third message.

Correspondingly, a receive end receives the third message. That the transmit end sends the third message may be that the transmit end broadcasts the third message. The third message may be an ADV-CONF message or another message including an SOR message list.

1202: The transmit end generates the first message.

The first message includes indication information, and the indication information indicates to construct the FC based on the order information, in the message list, of the list element corresponding to the first message in the message list. The list element corresponding to the first message in the message list includes a device identifier (for example, a device address) of the receive end of the first message. The receive end of the message may be understood as a receive end that receives the message. For example, the first message is a unicast message, the transmit end sends the first message to a receive end, and the receive end is a receive end of the first message. The receive end may use the list element that is in the message list and that includes the device identifier of the receive end as a list element corresponding to a to-be-received and/or to-be-sent message (for example, the first message) of the receive end in the message list. Different list elements in the message list correspond to different devices. In other words, different list elements in the message list correspond to different device identifiers. Each list element in the message list may include a device identifier. The message list may be included in a third message sent before the first message is sent. For example, the third message is an ADV-CONF message in an NBA-MMS UWB measurement process. The first message may be a message in a compressed PSDU format. For example, the first message is any one of an SOR message, a POLL message, a Response message, or a Report message.

The order information, in the message list, of the list element corresponding to the first message in the message list may be order information, in the message list, of the list element that is in the message list and that includes the device identifier (for example, the device address) of the receive end of the first message. The receive end may use the list element that is in the message list and that includes the device identifier of the receive end as a list element corresponding to a to-be-received and/or to-be-sent message (for example, the first message) of the receive end in the message list. A form of the device identifier is not limited in this application, and the device address is merely an example.

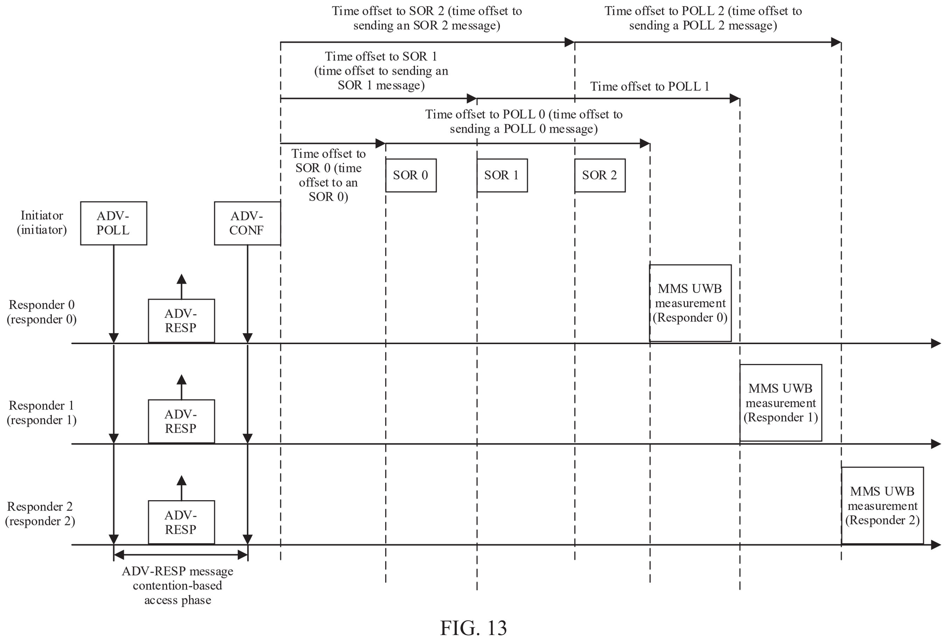

The following describes, with reference to the accompanying drawings, an example of the order information, in the message list, of the list element corresponding to the first message in the message list. A one-to-many (one-to-many) NBA-MMS UWB ranging process is formed by a plurality of one-to-one NBA-MMS UWB ranging processes based on a sequence of execution time. In other words, initiators of all the one-to-one NBA-MMS UWB ranging processes are the same. A typical one-to-many NBA-MMS UWB ranging process is shown in FIG. 4A. FIG. 13 shows an initialization process of pre-configuring one-to-many NBA-MMS UWB ranging. FIG. 13 is a diagram of an initialization process of pre-configuring one-to-many NBA-MMS UWB ranging. As shown in FIG. 13, for one-to-many NBA-MMS UWB ranging, an Initiator needs to first broadcast an ADV-POLL message, to notify all responders that the NBA-MMS UWB ranging needs to be performed, and each responder (responder) sends a respective ADV-RESP message to the Initiator in a contention-based access manner. After successfully receiving the ADV-RESP message in the contention-based access manner, the Initiator broadcasts an ADV-CONF message to all the responders. In FIG. 13, SOR 0 indicates an SOR message sent by the Initiator to a responder 0. SOR 1 indicates an SOR message sent by the Initiator to a responder 1. SOR 2 indicates an SOR message sent by the Initiator to a responder 2. A Time offset to SOR 0 (a time offset to sending an SOR 0 message) indicates a sending time of the SOR 0. A Time offset to SOR 1 (a time offset to sending an SOR 1 message) indicates a sending time of the SOR 1. A Time offset to SOR 2 (a time offset to sending an SOR 2 message) indicates a sending time of the SOR 2. For an MMS UWB measurement process of a responder, refer to the ranging process shown in FIG. 9. A Time offset to POLL 0 (a time offset to sending a POLL 0 message) indicates a sending time of a POLL message in an MMS UWB measurement process of the responder 0. A Time offset to POLL 1 (a time offset to sending a POLL 1 message) indicates a sending time of a POLL message in an MMS UWB measurement process of the responder 1. A Time offset to POLL 2 (a time offset to sending a POLL 2 message) indicates a sending time of a POLL message in an MMS UWB measurement process of the responder 2.

The ADV-CONF message carries an SOR message list including a plurality of SOR messages. The SOR message list is an example of the message list. Each list element in the SOR message list includes a device address and a sending time of a corresponding SOR message (time offset to SOR #X). In other words, each responder may determine whether the ADV-RESP message of the responder is successfully received by the initiator by querying whether the device address of the responder is included in the SOR message list, that is, determine whether the responder participates in a subsequent NBA-MMS UWB ranging process. Only a device whose ADV-RESP message is successfully received by the initiator can start the subsequent NBA-MMS UWB ranging process. An order (chronological order of the responder device address appearance, CODA) of the device addresses of the receive end in the message list of the ADV-CONF message may be used as the order information, in the message list, of the list element corresponding to the to-be-received and/or to-be-sent control message (for example, the first message) of the receive end in the message list. For example, after receiving the ADV-CONF message, the receive end queries whether the device address of the receive end is included in the SOR message list of the ADV-CONF message; and when the device address of the receive end is included in the SOR message list, uses an order of the device address in the SOR message list as the order information, in the message list, of the list element corresponding to the to-be-sent and/or to-be-received control message (for example, the first message) of the receive end in the message list.

An example of a PSDU format of an ADV-CONF message that includes an SOR message list is shown in Table 10 to Table 14 below. A location and a size of each field in Table 10 to Table 14 are not limited.

**Table 10**

| Octets: 1 | Octets: 2 | 1 | Variable | 2 |
|---|---|---|---|---|
| Frame Control | Address | Message ID (for ADV-CONF message) | Content | CRC |

Table 10 shows a diagram of a PSDU format of an ADV-CONF message. Meanings of fields in Table 10 are similar to meanings of fields in Table 1 and Table 2, and details are not described herein again. The Content field is a field including the SOR message list, as shown in Table 11. Table 11 shows a diagram of a format of an SOR message list.

**Table 11**

| Bits: 0 | 1-7 | Octets: Variable |
|---|---|---|
| SOR Message Management (SMM) Presence | RFU | SOR Message Management |

The SOR Message Management (SMM) Presence field is used to indicate whether an SOR Message Management field exists. For example, when a value of the SMM Presence field is 0, it indicates that the SOR message list does not include the SOR Message Management field; or when a value of the SMM Presence field is 1, it indicates that the SOR message list includes the SOR Message Management field. The RFU field is a reserved field. The SOR Message Management field is a field used to carry and manage the SOR message list. A possible format of the SOR Message Management field is shown in Table 12.

**Table 12**

| Bits: 0 | 1-7 | Octets: Variable |
|---|---|---|
| Address Type | SOR Messages List Length | SOR Messages List |

The Address Type field indicates a type of a device address included in each list element in the SOR Messages List. For example, when a value of the Address Type field is 0, it indicates that the device uses a short address (2 bytes); or when a value of the Address Type field is 1, it indicates that the device uses an extended address/long address (8 bytes). The SOR Messages List Length field indicates a length of the SOR Messages List. The SOR Messages List field is an SOR message list field. The SOR Messages List field includes a plurality of SOR message scheduling list elements (which may be referred to as list elements for short). The SOR message list fields are shown in Table 13 below.

**Table 13**

| Octets: 2 | Octets: 2 | Octets: 2 |
|---|---|---|
| SOR messages scheduling list element #0 (for device #0) | SOR messages scheduling list element #1 (for device #1) | SOR messages scheduling list element #2 (for device #2) |

| | | |
|---|---|---|
| (An order is #0) (An order is #1) (An order is #2) | | |

Each list element in Table 13 corresponds to a different device (device). For example, an SOR messages scheduling list element #0 in Table 13 corresponds to a device #0. It can be learned from the example shown in Table 13 that, the device #0 to a device #2 appear in the SOR message list in an order of 0, 1, and 2. In other words, CODA values of the devices are 0, 1, and 2. Table 14 shows a diagram of an example format of an SOR message list element.

**Table 14**

| Octets: TBD (to be determined) | Octets: 2 |
|---|---|
| Time offset to SOR | Device address |

It can be learned from Table 14 that each SOR message list element includes a Time offset to SOR field and a Device address field. A Device address in the Device address field is a device address of a device, and the Time offset to SOR field indicates a sending time of a to-be-received SOR message of the device. For example, after receiving the ADV-CONF message, the receive end queries whether the device address of the receive end is included in the SOR message list of the ADV-CONF message. When the device address of the receive end is included in the SOR message list, a Time offset to SOR field in the list element including the device address indicates a sending time of a to-be-received SOR message of the receive end.

It should be noted that a message carrying the SOR message list including the plurality of SOR messages is not limited in this application, and may be another message. The ADV-CONF message is merely an example.

The first message may be a message in a compressed PSDU format. For example, the first message is an SOR message. The indication information in the first message may occupy one or more bits. For example, when a value represented by the one or more bits occupied by the indication information is 1, the indication information indicates to construct an FC based on order information, in a message list, of a list element corresponding to the first message in the message list; or when a value represented by the one or more bits is 0, the indication information indicates to construct an FC in another manner, for example, construct an FC based on a slot index, a round index, and a block index that are carried in the first message. When the first message does not carry the slot index, the round index, or the block index, the index is 0 by default. Alternatively, when a value (that is, a value represented by the one or more bits occupied by the indication information) of the indication information is 0, the indication information indicates to construct an FC based on order information, in a message list, of a list element corresponding to the first message in the message list; or when a value of the indication information is 1, the indication information indicates to construct an FC in another manner. The following describes a possible format of the first message by using an example in which the first message is an SOR message. Table 15 shows an example of a PSDU format of an SOR message.

**Table 15**

| Bits: 0-6 | 7 | Octets: 2 | 1/3/Octet: 1 | 0/2 | 0/2 | Variable | 2 |
|---|---|---|---|---|---|---|---|
| Message ID | Security Enabled = 1 | Address | Presence Control | Block Index | Round Index | Secured Payload | MIC |

In Table 15, the Message ID field, the Security Enable field, the Address field, the Secured Payload field and the MIC field are consistent with the fields in Table 3, and details are not described herein again. Table 15 may include a Block Index field (occupying 2 bits), or may not include a Block Index field. Table 15 may include a Round Index field (occupying 2 bits), or may not include a Round Index field. The Presence Control field includes the indication information. The Presence Control field may occupy 1 bit, 3 bits, or 1 byte. A location and a size of the Presence Control field are not limited in this application, and a name of the Presence Control field is not limited either. In addition, the Presence Control field may be a new field, or may be included in an existing field. It should be understood that Table 15 shows merely an example of the PSDU format of the SOR message, and a location and a size of each field in Table 15 are not limited. Table 16-1, Table 16-2, Table 16-3, and Table 16-4 show four examples of the Presence Control field.

**Table 16-1**

| |
|---|
| 1 |
| Presence Control |

Refer to Table 16-1. The Presence Control field occupies 1 bit. The Presence Control field indicates whether to construct the FC based on the order information, in the message list, of the list element corresponding to the first message in the message list. For example, when a value of the Presence Control field is 1, the Presence Control field indicates to construct the FC based on the order information, in the message list, of the list element corresponding to the first message in the message list; or when a value of the Presence Control field is 0, the Presence Control field indicates to construct the FC based on the slot index, the round index, and the block index that are carried in the first message.

**Table 16-2**

| Bits: 0 | 1 | 2 |
|---|---|---|
| Block Index Presence | Round Index Presence | imRI enabled |

Refer to Table 16-2. The Presence Control field includes a Block Index Presence field (occupying 1 bit), a Round Index Presence field (occupying 1 bit), and an imRI enabled field (occupying 1 bit). It should be noted that a size and a location of each field in Table 16-2 are not limited. The Block Index Presence field indicates whether the Block Index field in Table 15 exists. The Round Index Presence field indicates whether the Round Index field in Table 15 exists. The first message shown in Table 15 may not include the Block Index field, and/or the first message shown in Table 15 may not include the Round Index field. When the first message does not include the Block Index field, a value of the Block Index field corresponding to the first message is 0 by default. When the first message does not include the Round Index field, a value of the Round Index field corresponding to the first message is 0 by default. The imRI enabled field indicates whether to construct the FC based on the order information, in the message list, of the list element corresponding to the first message in the message list. For example, when a value of the imRI enabled field is 1, the imRI enabled field indicates to construct the FC based on the first field in the first message; or when a value of the imRI enabled field is 0, the imRI enabled field indicates to construct the FC based on the slot index, the round index, and the block index that correspond to the first message. The imRI enabled field in Table 16-2 may be considered as the indication information.

**Table 16-3**

| Bits: 0 | 1 | 2 | 3-7 |
|---|---|---|---|
| Block Index Presence | Round Index Presence | imRI enabled | RFU |

In Table 16-3, meanings of the Block Index Presence field (occupying 1 bit), the Round Index Presence field (occupying 1 bit), and the imRI enabled field (occupying 1 bit) are the same as those in Table 16-2, and details are not described herein again. An RFU field is a reserved field, that is, a field reserved for future use, and occupies 5 bits. The Presence Control field shown in Table 16-3 occupies 1 byte. The imRI enabled field in Table 16-3 may be considered as the indication information. It should be noted that a size and a location of each field in Table 16-3 are not limited.

**Table 16-4**

| Bits: 0 | 1 | 2 | 3 | 4-7 |
|---|---|---|---|---|
| Block Index Presence | Round Index Presence | imSI enabled | imRI enabled | RFU |

In Table 16-4, meanings of the Block Index Presence field (occupying 1 bit), the Round Index Presence field (occupying 1 bit), and the imRI enabled field (occupying 1 bit) are the same as those in Table 16-2, and details are not described herein again. The imSI enabled field (occupying 1 bit) indicates whether to construct the FC based on the first field in the first message. For example, when a value of the imSI enabled field is 1, the imSI enabled field indicates to construct the FC based on the first field in the first message; or when a value of the imSI enabled field is 0, the imSI enabled field indicates to construct the FC based on the slot index, the round index, and the block index that correspond to the first message, or indicates to construct the FC based on the PN field in the first message. The imRI enabled field and the imSI enabled field in Table 16-4 may be considered in combination as the indication information. Alternatively, the indication information includes the imRI enabled field and the imSI enabled field in Table 16-4. For example, when the imRI enabled field indicates to construct the FC based on the order information, in the message list, of the list elements corresponding to the first message in the message list, and the imSI enabled indicates to construct the FC based on the first field in the first message, the indication information indicates to construct the FC based on the first field in the first message and the order information, in the message list, of the list elements corresponding to the first message in the message list. It should be noted that a size and a location of each field in Table 16-4 are not limited.

1203: The transmit end sends the first message.

Correspondingly, the receive end receives the first message.

In a possible implementation, the transmit end further performs the following operation: sending a second message, where the second message includes a second field that indicates a timeout for receiving the SOR message. Correspondingly, the receive end receives the second message. The receive end may stop monitoring the SOR message after the timeout, indicated by the second field, for receiving the SOR message, to avoid an increase in energy consumption caused by waiting for monitoring the SOR message for a long time. The second message further includes a field that indicates whether the second field exists. The second message is a message sent by the transmit end before the transmit end sends the SOR message (for example, the first message). The second message may be an ADV-CONF message, or may be another message. This is not limited in this application.

1204: The receive end obtains order information, in a message list of the third message, of a list element corresponding to the first message in the message list.

In a possible implementation, after receiving the third message, the receive end queries whether the device address of the receive end is included in the message list of the third message; and when the device address of the receive end is included in the message list, uses order information (for example, CODA values) of the device address in the message list as the order information, in the message list, of the list element corresponding to the to-be-sent and/or to-be-received message (including the first message) of the receive end in the message list. The order information of the device address in the message list may be an order of a list element including the device address in the message list. The to-be-sent and/or to-be-received message of the receive end may include an SOR message, a POLL message, a Response message, or a Report message. The receive end may store the order information of the device address of the receive end in the message list, to use the order information as the order information, in the message list, of the list element corresponding to the to-be-sent and/or to-be-received message (including the first message) of the receive end. After receiving the first message, the receive end may obtain the order information stored in the receive end, and use the order information as the order information, in the message list, of the list element corresponding to the first message in the message list. That the receive end obtains the order information, in the message list, of the list element corresponding to the first message in the message list may be understood as that the receive end obtains order information currently stored by the receive end. After the receive end stores the order information of the device address of the receive end in the message list, if the receive end receives a new third message (a new ADV-CONF message), the receive end may update the stored order information.

1205: The receive end constructs the FC based on the indication information in the first message and the order information, in the message list, of the list element corresponding to the first message in the message list.

A possible implementation of step 1205 is as follows: constructing the FC based on the indication information in the first message, a measurement slot identifier corresponding to the first message, the order information, and a measurement block identifier corresponding to the first message. For example, the receive end concatenates the measurement slot identifier (for example, the slot index) corresponding to the first message, the order information, and the measurement block identifier (for example, the block index) corresponding to the first message, to obtain the FC. In this example, the method for constructing the FC is FC = slot index ∥ CODA values ∥ block index. "∥" indicates a concatenation operation. The CODA values (that is, the order information) may be values indicating an order, in the message list, of the list elements corresponding to the first message in the message list, for example, #1, #2, and #3. After constructing the FC, the receive end may construct a Nonce based on the FC. The Nonce is used for encryption or authentication of the first message. Table 17 and Table 18 show examples of two types of Nonces.

**Table 17**

| Octets: 8 | Bits: 0-7 | 8-23 | 24-39 |
|---|---|---|---|
| Source Address | Slot Index | CODA values | Block Index |

The CODA values field in Table 17 includes the order information. For meanings of other fields in Table 17, refer to meanings of fields in Table 5. The Slot Index field, the CODA values field, and the Block Index field form the FC.

**Table 18**

| Octets: 8 | 4 | 1 |
|---|---|---|
| Source Address | CODA values | Nonce Security Level |

The CODA values field in Table 18 includes the order information. For meanings of other fields in Table 18, refer to meanings of fields in Table 3.

The method procedure in FIG. 12 may be understood as: constructing the FC corresponding to the control message based on the measurement slot identifier corresponding to the control message (that is, the first message), the order information, in the message list, of the list element corresponding to the control message in the message list, and the measurement block identifier corresponding to the control message. Order information, in a message list, of a list element in the message list corresponding to a control message in each sub-procedure (that is, one-to-one (one-to-one) NBA-MMS UWB ranging process) in the one-to-many (one-to-many) NBA-MMS UWB ranging process reflects an execution sequence of each sub-procedure in the one-to-many (one-to-many) NBA-MMS UWB ranging process. Refer to FIG. 13. A one-to-one MMS UWB ranging process in which the responder 0 participates is before a one-to-one MMS UWB ranging process in which the responder 1 participates, and the one-to-one MMS UWB ranging process in which the responder 1 participates is before an MMS UWB ranging process in which a responder 2 participates. Order information, in the message list, of a list element corresponding to a control message (like a POLL message, a Response message, and a Report message) in the one-to-one MMS UWB ranging process in which the responder 0 participates in the message list is #0, order information, in the message list, of a list element corresponding to a control message in the one-to-one MMS UWB ranging process in which the responder 1 participates in the message list is #1, and order information, in the message list, of a list element corresponding to a control message in the one-to-one MMS UWB ranging process in which the responder 2 participates in the message list is #2. Therefore, the method procedure in FIG. 12 may alternatively be understood as: constructing the FC based on the execution sequence of each sub-procedure in the one-to-many (one-to-many) NBA-MMS UWB ranging process.

In this embodiment of this application, the FC is constructed based on the order information, in the message list, of the list element corresponding to the first message in the message list, so that explicit carrying of a Round Index can be avoided, and signaling overheads can be reduced.

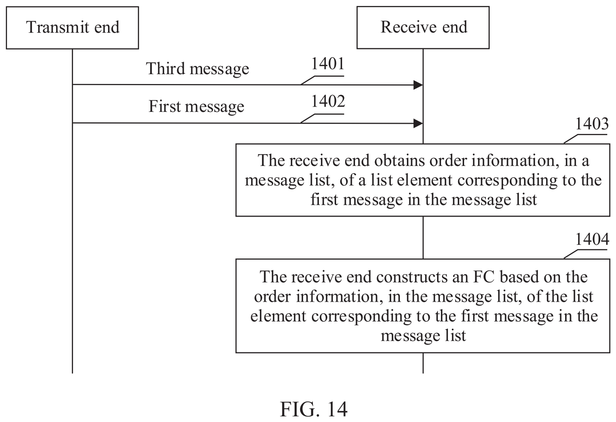

FIG. 14 shows an interaction procedure of another communication method for a UWB according to an embodiment of this application. The method shown in FIG. 14 may be applied to scenarios such as ranging, sensing, positioning, and communication, for example, scenarios such as NBA-MMS-based ranging, NBA-MMS-based sensing, and NBA-MMS-based positioning. In comparison with the method procedure in FIG. 12, in the method procedure in FIG. 14, a first does not include indication information, and a receive end constructs, by default, an FC based on order information, in a message list, of a list element corresponding to the first message in the message list. As shown in FIG. 14, the method includes the following steps.

1401: A transmit end sends a third message.

Correspondingly, the receive end receives the third message.

1402: The transmit end sends the first message.

Correspondingly, the receive end receives the first message. The first message may be any one of an SOR message, a POLL message, a Response message, or a Report message.

1403: The receive end obtains the order information, in the message list, of the list element corresponding to the first message in the message list.

For step 1403, refer to step 1204.

1404: The receive end constructs the FC based on the order information, in the message list, of the list element corresponding to the first message in the message list.

A possible implementation of step 1404 is as follows: constructing the FC based on a measurement slot identifier corresponding to the first message, the order information, and a measurement block identifier corresponding to the first message. For example, the receive end concatenates the measurement slot identifier (for example, a slot index) corresponding to the first message, the order information, and the measurement block identifier (for example, a block index) corresponding to the first message, to obtain the FC. After the receive end receives the third message, order information, in the message list, of a list element corresponding to a message sent or received by the receive end (belonging to the same one-to-one NBA-MMS UWB ranging process) in the message list is the same. Because the messages in the same one-to-one NBA-MMS UWB ranging process correspond to different measurement slot identifiers, the messages correspond to different FCs.

In this embodiment of this application, the FC is constructed based on the order information, in the message list, of the list element corresponding to the first message in the message list, so that explicit carrying of a Round Index can be avoided, and signaling overheads can be reduced. In addition, because the first message does not include the indication information, signaling overheads in the solution in FIG. 14 are less than those in the solution in FIG. 12.

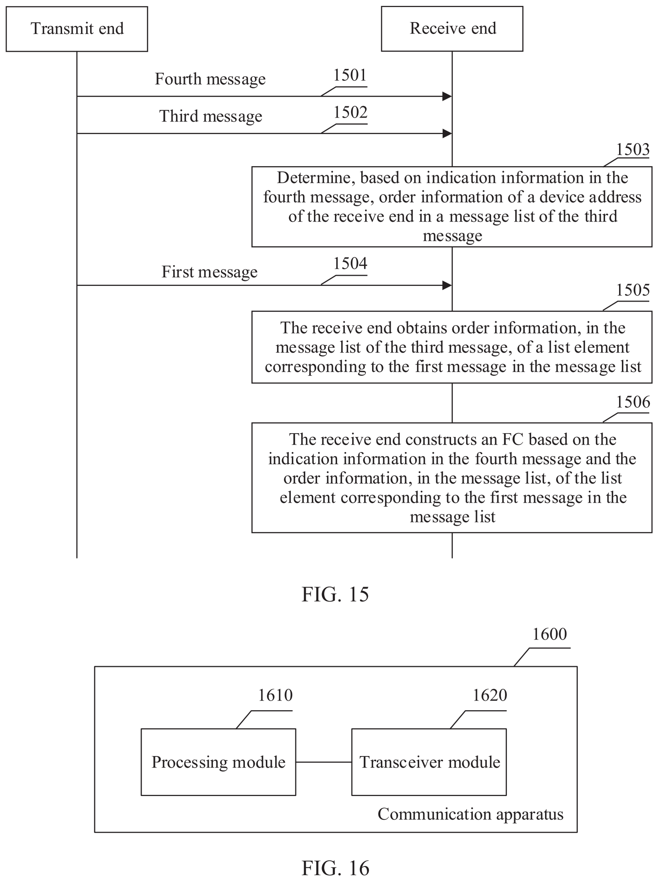

FIG. 15 shows an interaction procedure of another communication method for a UWB according to an embodiment of this application. In comparison with the method procedure in FIG. 12, in the method procedure in FIG. 15, a first message does not include indication information that indicates to construct an FC based on order information, in a message list, of a list element corresponding to the first message in the message list, and a fourth message sent before the first message includes the indication information. As shown in FIG. 15, the method includes the following steps.

1501: A transmit end sends the fourth message.

Correspondingly, a receive end receives the fourth message. The fourth message includes the indication information, and the indication information indicates to construct the FC based on the order information, in the message list, of the list element corresponding to the first message in the message list. The fourth message may be an ADV-POLL message, an ADV-RESP message, higher layer signaling, or another message. This is not limited herein. The first message may be any one of an SOR message, a POLL message, a Response message, or a Report message. Alternatively, the indication information indicates the receive end to construct the FC based on order information, in the message list, of a list element corresponding to each control message received and/or sent by the receive end in the message list after the transmit end sends a third message. The constructed FC is used for encryption or authentication of each control message. The third message may be an ADV-CONF message. After the transmit end sends the third message, the control message received and/or sent by the receive end include an SOR message, a POLL message, a Response message, and a Report message.

1502: The transmit end sends the third message.

Correspondingly, the receive end receives the third message. For step 1502, refer to step 1201.

1503: The receive end determines, based on the indication information in the fourth message, order information of a device address of the receive end in the message list of the third message.

The receive end may store the order information of the device address of the receive end in the message list of the third message.

1504: The transmit end sends the first message.

Correspondingly, the receive end receives the first message.

1505: The receive end obtains the order information, in the message list of the third message, of the list element corresponding to the first message in the message list.

A possible implementation of step 1505 is as follows: The receive end obtains the order information of the device address stored in the receive end in the message list of the third message, and uses the order information as the order information, in the message list of the third message, of the list element corresponding to the first message in the message list. In other words, the order information stored by the receive end is the order information, in the message list of the third message, of the list element corresponding to the first message in the message list.

1506: The receive end constructs the FC based on the indication information in the fourth message and the order information, in the message list, of the list element corresponding to the first message in the message list.

A possible implementation of step 1506 is as follows: constructing the FC based on the indication information in the fourth message and based on a measurement slot identifier corresponding to the first message, the order information, and a measurement block identifier corresponding to the first message.

In this embodiment of this application, the FC is constructed based on the order information, in the message list, of the list element corresponding to the first message in the message list, so that explicit carrying of a Round Index can be avoided, and signaling overheads can be reduced.

The following describes, with reference to the accompanying drawings, a structure of a communication apparatus that can implement the communication method for a UWB provided in embodiments of this application.

FIG. 16 is a diagram of a structure of a communication apparatus 1600 according to an embodiment of this application. The communication apparatus 1600 may correspondingly implement functions or steps implemented by a transmit end in the foregoing method embodiments, or may correspondingly implement functions or steps implemented by a receive end in the foregoing method embodiments. The communication apparatus may include a processing module 1610 and a transceiver module 1620. In a possible implementation, the apparatus may further include a storage unit. The storage unit may be configured to store instructions (code or a program) and/or data. The processing module 1610 and the transceiver module 1620 may be coupled to the storage unit. For example, the processing module 1610 may read the instructions (the code or the program) and/or the data in the storage unit, to implement a corresponding method. The foregoing units may be independently disposed, or may be partially or completely integrated. For example, the transceiver module 1620 may include a sending module and a receiving module. The sending module may be a transmitter, and the receiving module may be a receiver. An entity corresponding to the transceiver module 1620 may be a transceiver, or may be a communication interface.

In some possible implementations, the communication apparatus 1600 can correspondingly implement behavior and functions of the transmit end in the foregoing method embodiments. For example, the communication apparatus 1600 may be the transmit end, or may be a component (for example, a chip or a circuit) applied to the transmit end. For example, the transceiver module 1620 may be configured to perform all receiving or sending operations performed by the transmit end in the embodiments in FIG. 8, FIG. 10, FIG. 11, FIG. 12, FIG. 14, and FIG. 15. The processing module 1610 is configured to perform all operations performed by the transmit end other than the receiving and sending operations in the embodiments in FIG. 8, FIG. 10, FIG. 11, FIG. 12, FIG. 14, and FIG. 15, for example, step 801 in the embodiment shown in FIG. 8.

In some possible implementations, the communication apparatus 1600 can correspondingly implement behavior and functions of the receive end in the foregoing method embodiments. For example, the communication apparatus 1600 may be the receive end, or may be a component (for example, a chip or a circuit) applied to the receive end. For example, the transceiver module 1620 may be configured to perform all receiving or sending operations performed by the receive end in the embodiments in FIG. 8, FIG. 10, FIG. 11, FIG. 12, FIG. 14, and FIG. 15. The processing module 1610 is configured to perform all operations performed by the receive end other than the receiving and sending operations in the embodiments in FIG. 8, FIG. 10, FIG. 11, FIG. 12, FIG. 14, and FIG. 15.

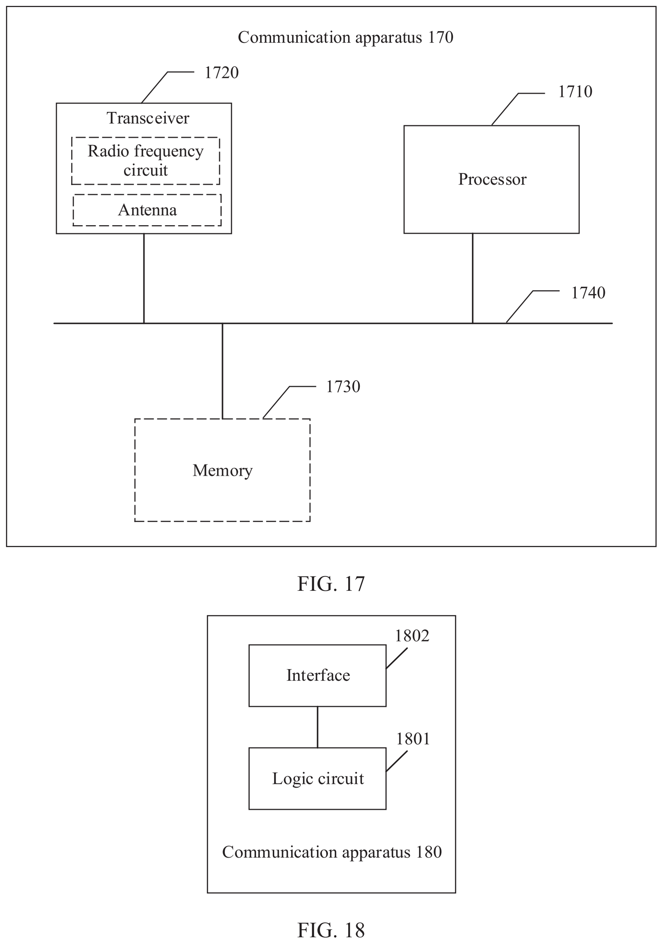

FIG. 17 is a diagram of a structure of another communication apparatus 170 according to an embodiment of this application. The communication apparatus in FIG. 17 may be the foregoing transmit end, or may be the foregoing receive end.

As shown in FIG. 17, the communication apparatus 170 includes at least one processor 1710 and a transceiver 1720.

In some embodiments of this application, the processor 1710 and the transceiver 1720 may be configured to perform functions, operations, or the like performed by the transmit end. For example, the transceiver 1720 is configured to perform all receiving or sending operations performed by the transmit end in the embodiments in FIG. 8, FIG. 10, FIG. 11, FIG. 12, FIG. 14, and FIG. 15. For example, the processor 1710 is configured to perform all operations performed by the transmit end other than the receiving and sending operations in the embodiments in FIG. 8, FIG. 10, FIG. 11, FIG. 12, FIG. 14, and FIG. 15.

In some embodiments of this application, the processor 1710 and the transceiver 1720 may be configured to perform functions, operations, or the like performed by the receive end. For example, the transceiver 1720 is configured to perform all receiving or sending operations performed by the receive end in the embodiments in FIG. 8, FIG. 10, FIG. 11, FIG. 12, FIG. 14, and FIG. 15. For example, the processor 1710 is configured to perform all operations performed by the receive end other than the receiving and sending operations in the embodiments in FIG. 8, FIG. 10, FIG. 11, FIG. 12, FIG. 14, and FIG. 15.

The transceiver 1720 is configured to communicate with another device/apparatus through a transmission medium. The processor 1710 receives or sends data and/or signaling through the transceiver 1720, and is configured to implement the method in the foregoing method embodiments. The processor 1710 may implement functions of the processing module 1610, and the transceiver 1720 may implement functions of the transceiver module 1620.

Optionally, the transceiver 1720 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. An input/output apparatus, like a touchscreen, a display, or a keyboard, is mainly configured to: receive data input by a user and output data to the user.

Optionally, the communication apparatus 170 may further include at least one memory 1730, configured to store program instructions and/or data. The memory 1730 is coupled to the processor 1710. The coupling in this embodiment of this application may be an indirect coupling or a communication connection between apparatuses, units, or modules in an electrical form, a mechanical form, or another form, and is used for information exchange between the apparatuses, the units, or the modules. The processor 1710 may operate cooperatively with the memory 1730. The processor 1710 may execute the program instructions stored in the memory 1730. At least one of the at least one memory may be included in the processor.

The processor 1710 may read a software program in the memory 1730, interpret and execute instructions of the software program, and process data of the software program. When data needs to be sent in a wireless manner, the processor 1710 performs baseband processing on the to-be-sent data, and then outputs a baseband signal to a radio frequency circuit. The radio frequency circuit performs radio frequency processing on the baseband signal, and then sends, through the antenna, a radio frequency signal to the outside in an electromagnetic wave form. When data is sent to the communication apparatus, the radio frequency circuit receives a radio frequency signal through the antenna, converts the radio frequency signal into a baseband signal, and outputs the baseband signal to the processor 1710. The processor 1710 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

A specific connection medium between the transceiver 1720, the processor 1710, and the memory 1730 is not limited in this embodiment of this application. In this embodiment of this application, the memory 1730, the processor 1710, and the transceiver 1720 are connected through a bus 1740 in FIG. 17. The bus is represented by using a bold line in FIG. 17. A manner of connection between other components is merely an example for description, and is not limited thereto. The bus may be classified into an address bus, a data bus, a control bus, and the like. For ease of representation, only one bold line is used to represent the bus in FIG. 17, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

FIG. 18 is a diagram of a structure of another communication apparatus 180 according to an embodiment of this application. As shown in FIG. 18, the communication apparatus shown in FIG. 18 includes a logic circuit 1801 and an interface 1802. The processing module 1610 in FIG. 16 may be implemented through the logic circuit 1801, and the transceiver module 1620 in FIG. 16 may be implemented through the interface 1802. The logic circuit 1801 may be a chip, a processing circuit, an integrated circuit, a system on chip (system on chip, SoC) chip, or the like. The interface 1802 may be a communication interface, an input/output interface, or the like. In this embodiment of this application, the logic circuit and the interface may be coupled to each other. A specific manner of connection between the logical circuit and the interface is not limited in this embodiment of this application.

In some embodiments of this application, the logic circuit and the interface may be configured to perform functions, operations, or the like performed by the transmit end.

In some embodiments of this application, the logic circuit and the interface may be configured to perform functions, operations, or the like performed by the receive end.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the method in the foregoing embodiment is performed.

This application further provides a communication system, including the transmit end and the receive end.

This application further provides a chip. The chip includes a communication interface and a processor. The communication interface is configured to receive and send a signal of the chip. The processor is configured to execute computer program instructions, so that a communication apparatus including the chip performs the method in the foregoing embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include both the volatile storage medium and the non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A communication method for an ultra-wideband UWB, comprising:
generating indication information, wherein the indication information indicates to construct a frame count FC based on a first field in a first message, and the first field indicates a type of the first message; and
sending the indication information.

2. The method according to claim 1, wherein the method further comprises:
sending a second message, wherein the second message comprises a second field that indicates a timeout for receiving a start-of-ranging SOR message.

3. The method according to claim 2, wherein the second message further comprises a field that indicates whether the second field exists.

4. The method according to claim 1 or 2, wherein the second message is an advertising confirmation ADV-CONF message.

5. The method according to any one of claims 1 to 4, wherein the sending the indication information comprises:
sending the first message, wherein the first message comprises the indication information.

6. A communication method for an ultra-wideband UWB, comprising:
receiving indication information, wherein the indication information indicates to construct a frame count FC based on a first field in a first message, and the first field indicates a type of the first message; and
constructing the FC based on the indication information.

7. The method according to claim 6, wherein the constructing the FC based on the indication information comprises:
constructing the FC based on the indication information, the first field, a measurement round identifier corresponding to the first message, and a measurement block identifier corresponding to the first message.

8. The method according to claim 6 or 7, wherein the receiving the indication information comprises:
receiving the first message, wherein the first message comprises the indication information.

9. The method according to any one of claims 1 to 8, wherein that the indication information indicates to construct the FC based on the first field in the first message comprises: the indication information indicates to construct the FC based on the first field and order information, in the message list, of a list element corresponding to the first message in the message list.

10. The method according to claim 9, wherein different list elements in the message list correspond to different devices.

11. The method according to claim 10, wherein each list element in the message list comprises a device identifier.

12. The method according to claim 10 or 11, wherein the message list is comprised in a third message sent before the first message is sent.

13. The method according to claim 12, wherein the third message is an advertising confirmation ADV-CONF message in a narrowband assisted multi-millisecond ultra-wideband NBA-MMS UWB measurement process.

14. The method according to any one of claims 1 to 13, wherein the indication information further indicates whether the first message comprises the measurement round identifier.

15. The method according to any one of claims 1 to 14, wherein the indication information further indicates whether the first message comprises the measurement block identifier.

16. A communication method for an ultra-wideband UWB, comprising:
receiving a first message; and
constructing a frame count FC based on a first field in the first message, wherein the first field indicates a type of the first message.

17. The method according to claim 16, wherein the constructing the frame count FC based on the first field in the first message comprises:
constructing the FC based on the first field, a measurement round identifier corresponding to the first message, and a measurement block identifier corresponding to the first message.

18. The method according to claim 16, wherein the constructing the frame count FC based on the first field in the first message comprises:
constructing the FC based on the first field and order information, in the message list, of a list element corresponding to the first message in the message list.

19. The method according to any one of claims 1 to 18, wherein the first message is a message in a compressed physical layer service data unit PSDU format.

20. The method according to claim 19, wherein the first message is a control message in the narrowband assisted multi-millisecond ultra-wideband NBA-MMS UWB measurement process.

21. The method according to claim 20, wherein the first message is any one of a start-of-ranging SOR message, a polling/initiating POLL message, a report message, or a response message.

22. A communication method for an ultra-wideband UWB, comprising:
generating indication information, wherein the indication information indicates to construct a frame count FC based on order information, in a message list, of a list element corresponding to a first message in the message list; and
sending the indication information.

23. A communication method for an ultra-wideband UWB, comprising:
receiving indication information, wherein the indication information indicates to construct a frame count FC based on order information, in a message list, of a list element corresponding to a first message in the message list; and
constructing the FC based on the indication information.

24. The method according to claim 23, wherein the constructing the FC based on the indication information comprises:
constructing the FC based on the indication information, a measurement slot identifier corresponding to the first message, the order information, and a measurement block identifier corresponding to the first message.

25. A communication method for an ultra-wideband UWB, comprising:
receiving a first message; and
constructing a frame count FC based on order information, in a message list, of a list element corresponding to the first message in the message list.

26. The method according to claim 25, wherein the constructing the frame count FC based on the order information, in the message list, of the list element corresponding to the first message in the message list comprises:
constructing the FC based on a measurement slot identifier corresponding to the first message, the order information, and a measurement block identifier corresponding to the first message.

27. The method according to claim 25, wherein the constructing the frame count FC based on the order information, in the message list, of the list element corresponding to the first message in the message list comprises:
constructing the FC based on a first field in the first message, the order information, and a measurement block identifier corresponding to the first message.

28. The method according to any one of claims 22 to 27, wherein different list elements in the message list correspond to different devices.

29. The method according to claim 28, wherein each list element in the message list comprises a device identifier.

30. The method according to any one of claims 22 to 29, wherein the message list is comprised in a third message sent before the first message is sent.

31. The method according to claim 30, wherein the third message is an advertising confirmation ADV-CONF message in a narrowband assisted multi-millisecond ultra-wideband NBA-MMS UWB measurement process.

32. The method according to any one of claims 22 to 24, wherein the indication information further indicates whether the first message comprises a measurement round identifier.

33. The method according to any one of claims 22 to 24, wherein the indication information further indicates whether the first message comprises the measurement block identifier.

34. The method according to any one of claims 22 to 24, wherein the indication information is comprised in the first message.

35. The method according to any one of claims 22 to 34, wherein the first message is a message in a compressed physical layer service data unit PSDU format.

36. The method according to claim 35, wherein the first message is a control message in the narrowband assisted multi-millisecond ultra-wideband NBA-MMS UWB measurement process.

37. The method according to claim 36, wherein the first message is any one of a start-of-ranging SOR message, a polling/initiating POLL message, a report message, or a response message.

38. A communication apparatus, comprising a module or a unit configured to implement the method according to any one of claims 1 to 21.

39. A communication apparatus, comprising a module or a unit configured to implement the method according to any one of claims 22 to 37.

40. A communication apparatus, comprising a processor, wherein the processor is coupled to a memory, the memory stores computer program instructions, and the processor is configured to execute the computer program instructions, to enable the communication apparatus to perform the method according to any one of claims 1 to 37.

41. A chip, comprising:
a communication interface, configured to receive/send a signal of the chip; and
a processor, configured to execute computer program instructions, to enable a communication apparatus that comprises the chip to perform the method according to any one of claims 1 to 37.

42. A computer-readable storage medium, wherein the computer-readable storage medium stores a computer program, the computer program comprises program instructions, and when the program instructions are executed, a computer is enabled to perform the method according to any one of claims 1 to 37.

43. A computer program product, wherein when the computer program product runs on a computer, the computer is enabled to perform the method according to any one of claims 1 to 37.

44. A communication method for an ultra-wideband UWB, comprising:
generating an advertising confirmation ADV-CONF message, wherein the ADV-CONF message comprises a time offset to SOR list and indication information that indicates a number of responders, the time offset to SOR list comprises an address of a first responder and a time offset to start-of-ranging SOR corresponding to the first responder, and the time offset to SOR corresponding to the first responder is a time offset to a time when an initiator sends a first SOR message to the first responder; and
sending the ADV-CONF message.

45. The method according to claim 44, wherein the method further comprises:
sending the first SOR message to the first responder, wherein the first SOR message comprises a time offset between a time when the first responder receives the first SOR message and a time when the first responder sends a polling/initiating POLL message.

46. A communication method for an ultra-wideband UWB, comprising:
receiving an advertising confirmation ADV-CONF message, wherein the ADV-CONF message comprises a time offset to SOR list and indication information that indicates a number of responders, the time offset to SOR list comprises an address of a first responder and a time offset to start-of-ranging SOR corresponding to the first responder, and the time offset to SOR corresponding to the first responder is a time offset to a time when an initiator sends a first SOR message to the first responder; and
obtaining, based on the ADV-CONF message, the time offset to SOR corresponding to the first responder.

47. The method according to claim 46, wherein the method further comprises:
receiving the first SOR message, wherein the first SOR message comprises a time offset between a time when the first responder receives the first SOR message and a time when the first responder sends a polling/initiating POLL message; and
obtaining, based on the first SOR message, the time offset between the time when the first SOR message is received and the time when the first responder sends the polling/initiating POLL message.

48. A communication apparatus, comprising a module or a unit configured to implement the method according to any one of claims 44 to 47.

49. A communication apparatus, comprising a processor, wherein the processor is coupled to a memory, the memory stores computer program instructions, and the processor is configured to execute the computer program instructions, to enable the communication apparatus to perform the method according to any one of claims 44 to 47.

50. A chip, comprising:
a communication interface, configured to receive/send a signal of the chip; and
a processor, configured to execute computer program instructions, to enable a communication apparatus that comprises the chip to perform the method according to any one of claims 44 to 47.

51. A computer-readable storage medium, wherein the computer-readable storage medium stores a computer program, the computer program comprises program instructions, and when the program instructions are executed, a computer is enabled to perform the method according to any one of claims 44 to 47.

52. A computer program product, wherein when the computer program product runs on a computer, the computer is enabled to perform the method according to any one of claims 44 to 47.
